# EUROPEAN PATENT APPLICATION

(11) **EP 4 604 649 A1**
(43) Date of publication of application: **20.08.2025**
(21) Application number: 23877683.5
(22) Date of filing: 12.10.2023
(51) Int. Cl.: H04W 72/232, H04B 7/06, H04W 16/28, H04W 72/04, H04B 7/155, H04W 84/04, H04L 5/00, H04W 72/23

(54) **OPERATION METHOD FOR DEVICE IN WIRELESS COMMUNICATION SYSTEM, AND DEVICE USING SAME**

(30) Priority: 12.10.2022 KR 20220130890; 04.11.2022 KR 20220146466; 09.02.2023 KR 20230017243
(71) Applicant: LG Electronics Inc., Yeongdeungpo-gu Seoul 07336 (KR)
(72) Inventor: YOU, Hyangsun, Seoul 06772 (KR); BAN, Choongsang, Seoul 06772 (KR); KIM, Kijun, Seoul 06772 (KR); KO, Hyunsoo, Seoul 06772 (KR); SHIM, Jaenam, Seoul 06772 (KR)
(74) Representative: Mooser, Sebastian Thomas
(86) International application number: PCT/KR2023/015664
(87) International publication number: WO 2024/080760

(57) **Abstract**

Provided are an operation method for an NCR comprising an NCR-MT and an NCR-Fwd in a wireless communication system, and a device using same. Beam index information for a beam index applied to an access link between the NCR-Fwd and a terminal and time resource information related to the beam index are received from a base station through the NCR-MT, and the NCR-Fwd performs a forwarding operation using a beam indicated by the beam index in a time resource indicated by the time resource information. Here, the beam index information separately indicates a downlink beam index and an uplink beam index applied to the access link.

## Description

### TECHNICAL FIELD

The present disclosure relates to a method of operating a device in a wireless communication system and a device using the method.

### BACKGROUND ART

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this disclosure, for convenience of description, this technology may be referred to as new RAT or new radio (NR).

Meanwhile, a repeater (also referred to as a relay) may be introduced into NR. The repeater is network-controlled repeater (NCR). NCR may include NCR-MT (mobile termination) and NCR-Fwd (Forwarding). The NCR-MT may perform a role of communicating with the base station and controlling the NCR-Fwd. The NCR-Fwd performs signal forwarding function. That is, a signal received from a base station can be transmitted to a UE, or a signal received from a UE can be transmitted to the base station. The link between NCR-Fwd and the UE may be called an access link, and the link between NCR-Fwd and the base station may be called a backhaul link. The link between NCR-MT and the base station may be called a control link.

When these NCRs operate in a time division duplex (TDD) band, beam correspondence between the downlink transmit (DL-Tx) beam and the uplink receive (UL-Rx) beam for the access link of the NCR-Fwd can be assumed. For example, when NCR-Fwd performs DL-Tx in a specific beam direction in the access link, UL-Rx can be performed in the same beam direction. In other words, when the NCR-Fwd performs DL transmission in a specific beam direction to a specific UE, UL reception from that UE can apply a UL beam (in the same beam direction) that is beam related/matching with the beam used for DL transmission.

The corresponding DL beam and UL beam in the access link have the same beam index. The forwarding direction of the beam indicated in the access link can be determined based on the corresponding time domain resources and UL/DL TDD configuration.

In other words, when NCR-Fwd is instructed to apply a specific beam index at a specific time resource, that beam index may mean the index of the DL beam if the time resource is a DL resource, or the index of the UL beam if the time resource is a UL resource.

On the other hand, if the NCR is operating in the frequency division duplex (FDD) band, it may be difficult to assume beam relevance/matching between the DL-Tx beam and UL-Rx beam for the access link of the NCR-Fwd, since the NCR-Fwd will use independent radio frequency (RF) and antennas on the downlink (DL) and uplink (UL) carriers.

That is, it may be difficult to directly apply a conventional beam indication method to NCRs operating in the FDD band.

### DISCLOSURE

### TECHNICAL PROBLEM

The technical problem to be solved by the present disclosure is to provide a method of operating a device in a wireless communication system and a device using the method.

### TECHNICAL SOLUTION

Provided are an operating method of an NCR including an NCR (network-controlled repeater)-MT (mobile termination) and an NCR-Fwd (forward) in a wireless communication system and a device using the method. In the above method, beam index information for a beam index applied to an access link between the NCR-Fwd and a UE and time resource information related to the beam index are received from a base station through the NCR-MT, and the NCR-Fwd performs a forwarding operation using a beam indicated by the beam index in a time resource indicated by the time resource information. The beam index information separately indicates the downlink beam index and uplink beam index applied to the access link.

### ADVANTAGEOUS EFFECTS

According to the present disclosure, beam indexes and ON-OFF operations applied to DL and UL can be separately instructed for an access link of NCR-Fwd in an FDD environment. Accordingly, DL forwarding operations and UL forwarding operations can be performed independently, thereby increasing transmission efficiency.

### BRIEF DESCRIPTION OF THE DRAWINGS

FIG. 1 illustrates a system structure of a New Generation Radio Access Network (NG-RAN) to which NR is applied.
FIG. 2 is a diagram showing a wireless protocol architecture for a user plane.
FIG. 3 is a diagram showing a wireless protocol architecture for a control plane.
FIG. 4 illustrates a functional division between an NG-RAN and a 5GC.
FIG. 5 illustrates an example of a frame structure that may be applied in NR.
FIG. 6 illustrates a slot structure of the NR frame.
FIG. 7 illustrates a CORESET.
FIG. 8 shows an example of a frame structure for a new radio access technology.
FIG. 9 illustrates a structure of self-contained slot.
FIG. 10 illustrates physical channels and general signal transmission.
FIG. 11 illustrates transport network architectures for 5G.
FIG. 12 shows an example of a topology in which an NCR performs transmission and reception between a base station and a UE.
FIG. 13 is a diagram comparing operations of an NCR and an existing RF repeater.
FIG. 14 illustrates the structure of NCR.
FIG. 15 illustrates the Tx beam direction operated by the gNB (base station) and the Tx beam direction operated by the RU in the NCR topology of a single hop between gNB-NCR-UE.
FIG. 16 illustrates time resources having a period.
FIG. 17 illustrates an operation method of NCR including NCR-MT and NCR-Fwd in a wireless communication system..
FIG. 18 illustrates signaling and operation between a base station, an NCR, and a UE when applying the method of FIG. 17.
FIG. 19 illustrates a wireless device applicable to this specification.
FIG. 20 illustrates an example of a structure of a signal processing module.
FIG. 21 shows another example of the structure of a signal processing module in a transmission device.
FIG. 22 illustrates an example of a wireless communication device according to an embodiment of the present disclosure.
FIG. 23 shows another example of a wireless device.
FIG. 24 shows another example of a wireless device applied to the present specification.
FIG. 25 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

A wireless communication system to which the present disclosure may be referred to as an Evolved-UMTS Terrestrial Radio Access Network (E-UTRAN) or a Long Term Evolution (LTE)/LTE-A system, for example.

The E-UTRAN includes at least one base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal/termination (MT), a wireless device, terminal, etc. The BS is generally a fixed station that communicates with the UE and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

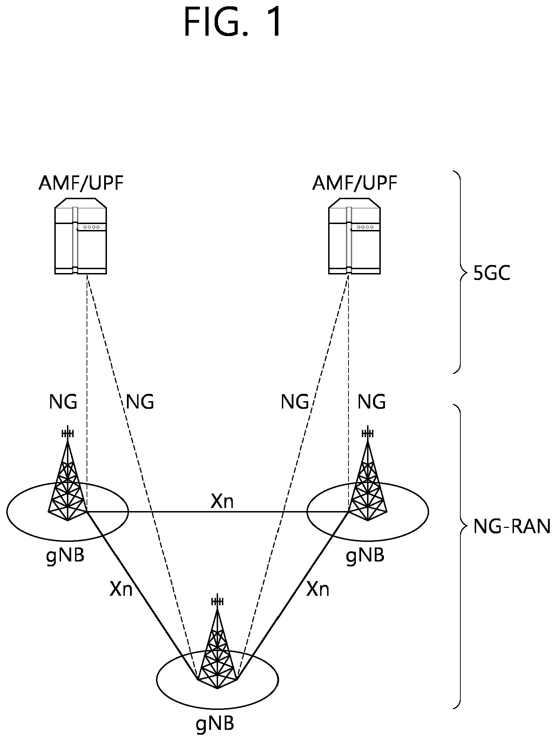

FIG. 1 illustrates a system structure of a next generation radio access network (NG-RAN) to which NR is applied.

Referring to FIG. 1, the NG-RAN may include a base station (e.g., gNB and/or an eNB) that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

Meanwhile, layers of a radio interface protocol between the UE and the network may be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

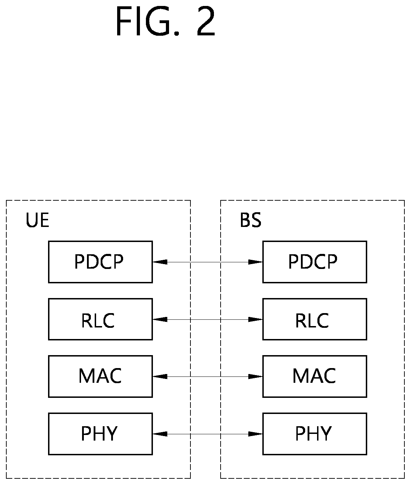

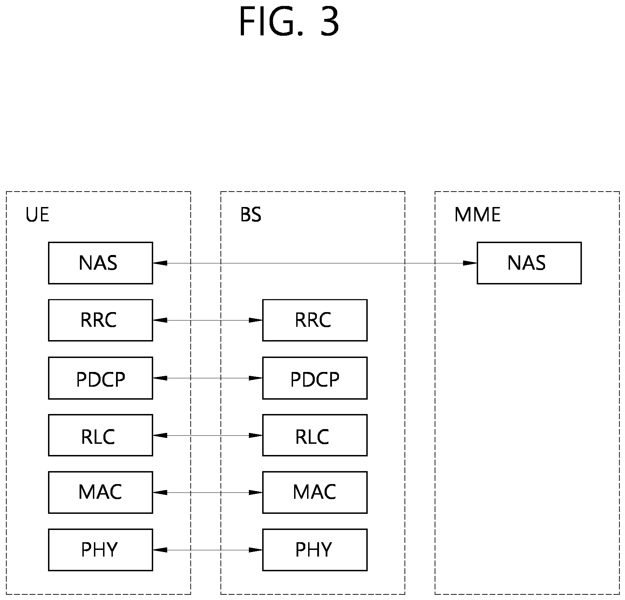

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission of subframe.

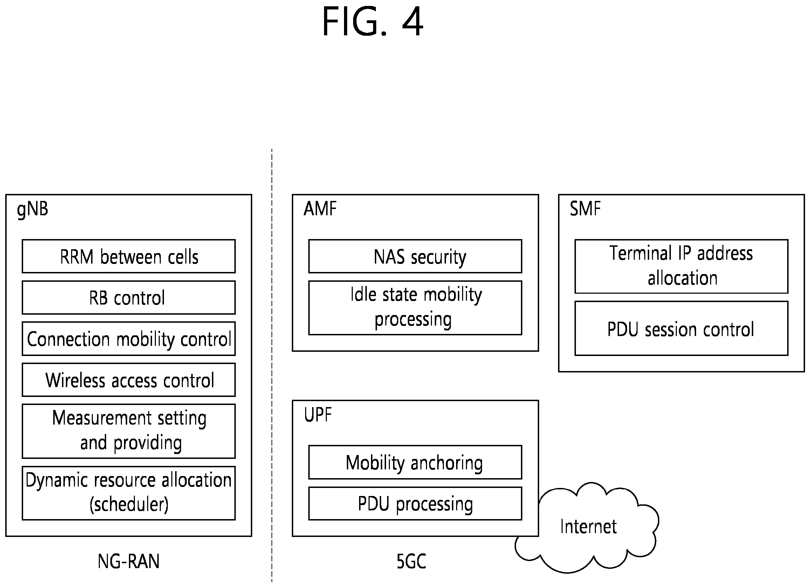

FIG. 4 illustrates a functional division between an NG-RAN and a 5GC.

Referring to FIG. 4, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

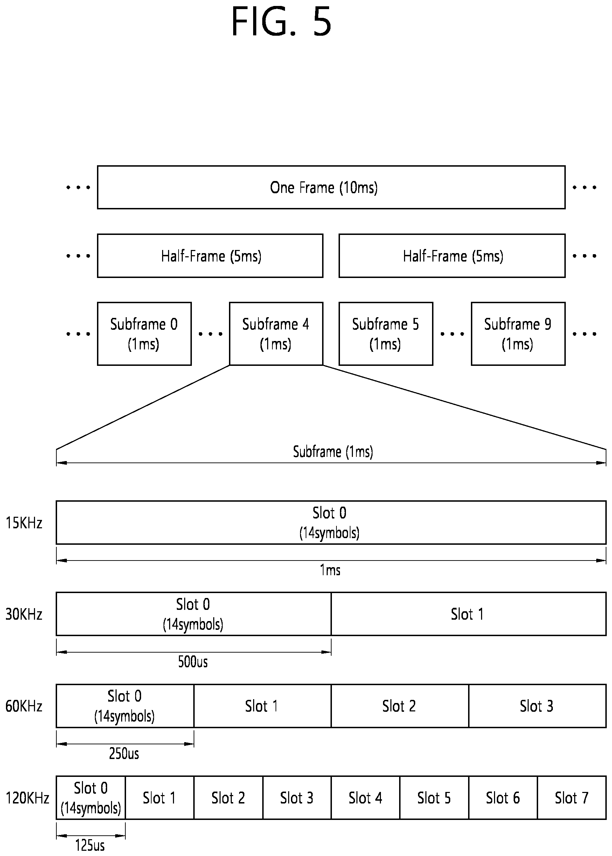

FIG. 5 illustrates an example of a frame structure that may be applied in NR.

Referring to FIG. 5, a radio frame (which may be called as a frame hereinafter) may be used for uplink and downlink transmission in NR. A frame has a length of 10 ms and may be defined as two 5 ms half-frames (Half-Frame, HF). A half-frame may be defined as five 1 ms subframes (Subframe, SF). A subframe may be divided into one or more slots, and the number of slots in a subframe depends on subcarrier spacing (SCS). Each slot includes 12 or 14 OFDM(A) symbols according to a cyclic prefix (CP). When a normal CP(=it also be called general CP or common CP) is used, each slot includes 14 symbols. When an extended CP is used, each slot includes 12 symbols. Here, the symbol may include an OFDM symbol (or a CP-OFDM symbol) and an SC-FDMA symbol (or a DFT-s-OFDM symbol).

The following table 1 illustrates a subcarrier spacing configuration µ.

**[Table 1]**

| µ | Δf = 2^{µ}·15[kHz] | Cyclic prefix |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{syrnb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 5, µ=0, 1, 2, and 3 are exemplified.

Table 2-1 below exemplifies that the number of symbols per slot, the number of slots per frame, and the number of slots per subframe vary according to SCS when the extended CP is used.

**[Table 2-1]**

| SCS (15·2^{µ}) | N^{slot}_{syrnb} | N^{frame,u}ₛₗₒₜ | N^{subframe,u}ₛₗₒₜ |
|---|---|---|---|
| 60kHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

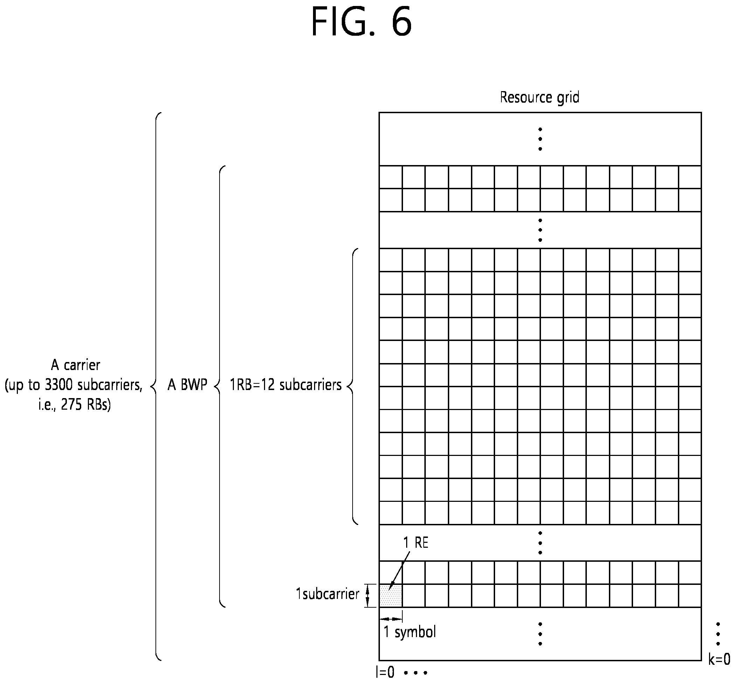

FIG. 6 illustrates a slot structure.

A slot may comprise a plurality of symbols in a time domain. For example, in case of a normal CP, one slot may include 14 symbols (or 7 symbols). However, in case of an extended CP, one slot may include 12 symbols (or 6 symbols). The carrier may include a plurality of subcarriers in a frequency domain. A resource block (RB) may be defined as a plurality of consecutive subcarriers (e.g., 12) in the frequency domain. A bandwidth part (BWP) may be defined as a plurality of consecutive (P)RBs in the frequency domain, and may correspond to one numerology (e.g., SCS, CP length, etc.). A carrier may include a maximum of N (e.g., 5) BWPs. Data communication is performed through the activated BWP, and only one BWP can be activated for one UE. Each element in the resource grid is referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring means decoding each PDCCH candidate according to a downlink control information (DCI) format. The UE monitors a set of PDCCH candidates in one or more control resource sets (CORESETs, described below) on the activated DL BWP of each activated serving cell for which PDCCH monitoring is configured according to a corresponding search space set.

A new unit called a control resource set (CORESET) may be introduced in the NR. The UE may receive a PDCCH in the CORESET.

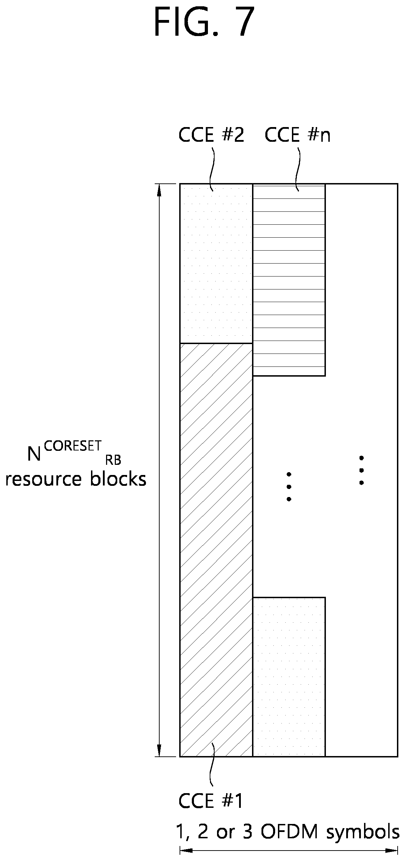

FIG. 7 illustrates a CORESET.

Referring to FIG. 7, the CORESET includes N^{CORESET}_{RB} resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As shown in FIG. 7, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the conventional wireless communication system (e.g., LTE/LTE-A) is configured over the entire system band used by a base station (BS). All the UEs, excluding some (e.g., eMTC/NB-IoT UE) supporting only a narrow band, should be able to receive wireless signals of the entire system band of the BS in order to properly receive/decode control information transmitted by the BS.

On the other hand, in NR, CORESET described above was introduced. CORESETs are radio resources for control information to be received by the UE and may use only a portion, rather than the entirety of the system bandwidth in the frequency domain. In addition, in the time domain, only some of the symbols in the slot may be used. The BS may allocate the CORESET to each UE and may transmit control information through the allocated CORESET. A UE in NR can receive control information of a base station even if it does not necessarily receive the entire system band.

The CORESET may include a UE-specific CORESET for transmitting UE-specific control information and a common CORESET for transmitting control information common to all UEs.

Meanwhile, NR may require high reliability according to applications. In such a situation, a target block error rate (BLER) for downlink control information (DCI) transmitted through a downlink control channel (e.g., physical downlink control channel (PDCCH)) may remarkably decrease compared to those of conventional technologies. As an example of a method for satisfying requirement that requires high reliability, content included in DCI can be reduced and/or the amount of resources used for DCI transmission can be increased. Here, resources can include at least one of resources in the time domain, resources in the frequency domain, resources in the code domain and resources in the spatial domain.

In NR, the following technologies/features can be applied.

### <Self-contained subframe structure>

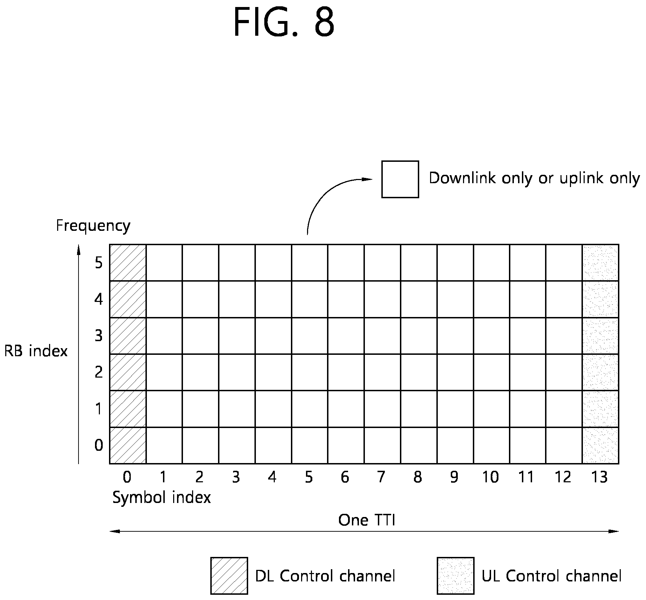

FIG. 8 shows an example of a frame structure for a new radio access technology.

In NR, as shown in FIG. 8, a structure in which a control channel and a data channel are time-division-multiplexed within one TTI can be considered as a frame structure in order to minimize latency.

In FIG. 8, a hatched area indicates a downlink control area, and a black area indicates an uplink control area. The unmarked area may be used for downlink data (DL data) transmission or uplink data (UL data) transmission. A feature of this structure is that downlink (DL) transmission and uplink (UL) transmission are sequentially performed within one subframe and thus DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

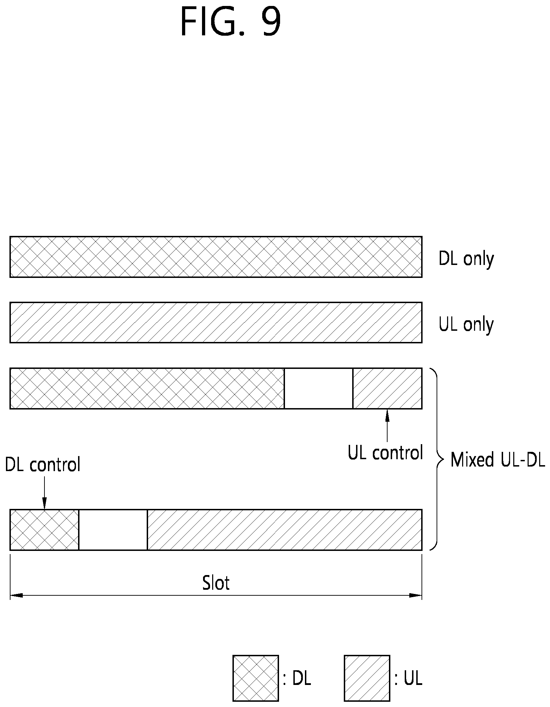

FIG. 9 illustrates a structure of self-contained slot.

In NR system, one slot includes all of a DL control channel, DL or UL data channel, UL control channel, and so on. For example, the first N symbols in a slot may be used for transmitting a DL control channel (in what follows, DL control region), and the last M symbols in the slot may be used for transmitting an UL control channel (in what follows, UL control region). N and M are each an integer of 0 or larger. A resource region located between the DL and UL control regions (in what follows, a data region) may be used for transmission of DL data or UL data. As one example, one slot may correspond to one of the following configurations. Each period is listed in the time order.
1. DL only configuration
2. UL only configuration
3. Mixed UL-DL configuration
   - DL region + GP (Guard Period) + UL control region
   - DL control region + GP + UL region

a DL region: (i) a DL data region, (ii) DL control region plus DL data region
a UL region: (i) an UL data region, (ii) UL data region plus UL control region.

In the DL control region, a PDCCH may be transmitted, and in the DL data region, a PDSCH may be transmitted. In the UL control region, a PUCCH may be transmitted, and in the UL data region, a PUSCH may be transmitted. In the PDCCH, Downlink Control Information (DCI), for example, DL data scheduling information or UL data scheduling information may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming), an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting method. At this time, analog beams belonging to different antenna panels within one symbol can be transmitted simultaneously, and a method of introducing a beam reference signal (BRS), which is a reference signal (RS) to which a single analog beam (corresponding to a specific antenna panel) is applied and transmitted to measure channels for each analog beam, is being discussed. The BRS may be defined for a plurality of antenna ports, and each antenna port of the BRS may correspond to a single analog beam. At this time, unlike the BRS, all analog beams in an analog beam group may be applied and transmitted so that a synchronization signal or xPBCH can be well received by any UE.

In the NR, in a time domain, a synchronization signal block (SSB, or also referred to as a synchronization signal and physical broadcast channel (SS/PBCH) block) may consist of 4 OFDM symbols indexed from 0 to 3 in an ascending order within a synchronization signal block, and a primary synchronization signal (PSS), secondary synchronization signal (SSS), and a PBCH associated with demodulation reference signal (DMRS) may be mapped to the symbols. As described above, the synchronization signal block (SSB) may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, a beam-based transmission/reception operation may be performed. When the reception performance of the current serving beam is degraded, a process of finding a new beam may be performed through a process called beam failure recovery (BFR).

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have gone through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread' |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDDCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

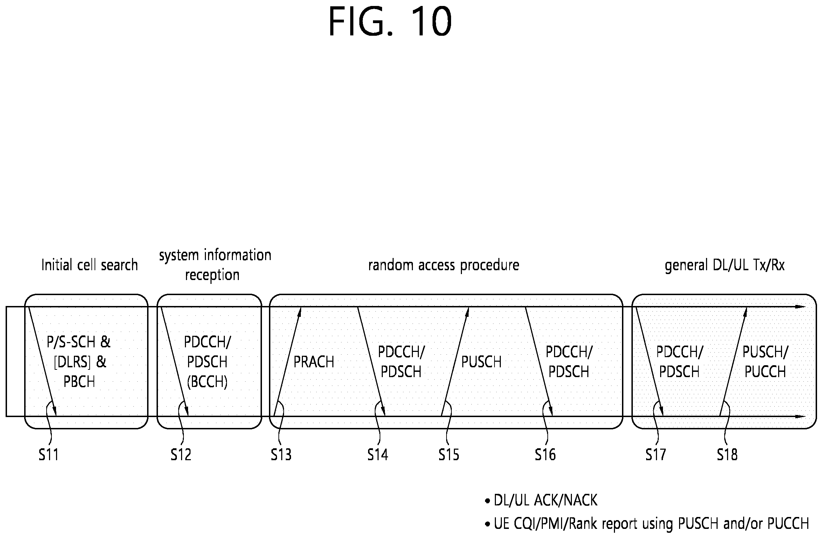

FIG. 10 illustrates physical channels and typical signal transmission.

Referring to FIG. 10, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search may be referred to as a procedure in which a UE obtains time and frequency synchronization with a cell and detects a cell ID of the cell. Cell search may be based on a primary synchronization signal and a secondary synchronization signal of the cell and the PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (This can be referred to as the process of receiving a contention resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. In the following, the proposed method is described based on the new RAT (NR) system for convenience of description, but the range of systems to which the proposed method is applied can be extended to other systems such as 3GPP LTE/LTE-A systems in addition to the NR system.

One potential technology that aims to enable future cellular network deployment scenarios and applications is support for wireless backhaul and relay links. This enables flexible and highly dense deployment of NR cells without the need to proportionally densify the transport network.

With native deployment of massive MIMO or multi-beam systems, greater bandwidth is expected to be available in NR compared to LTE (e.g., mmWave spectrum), so opportunities are created for the development and deployment of integrated access and backhaul links. This is done by establishing a number of control and data channels/procedures defined to provide connectivity or access to UEs and it allows easier deployment of a dense network of self-backhauled NR cells in a more integrated manner. These systems are referred to as integrated access and backhaul links (IAB).

The present disclosure defines the followings.
- AC(x): access link between node (x) and UE(s).
- BH(xy): Backhaul link between node (x) and node (y).

In this case, the node may mean a donor gNB (DgNB) or a relay node (RN). Here, the DgNB or donor node may be a gNB that provides a function of supporting backhaul for IAB nodes.

When relay node 1 and relay node 2 exist, if relay node 1 is connected to relay node 2 through a backhaul link and relays data transmitted to and received from relay node 2, relay node 1 is called the parent node of relay node 2, and relay node 2 is called a child node of relay node 1.

Technical features that are individually described in one drawing in this specification may be implemented individually or simultaneously.

The following drawings are made to explain a specific example of the present specification. Since the names of specific devices or names of specific signals/messages/fields described in the drawings are provided as examples, the technical features of the present specification are not limited to the specific names used in the drawings below.

Below, a network-controlled repeater (NCR) and its operation method in an NR environment are described. Hereinafter, NCR may be simply referred to as a relay or a repeater. Hereinafter, MT may be referred to as NCR-MT (mobile termination or mobile terminal), and RU may be referred to as NCR-Fwd (forwarding).

### <Transport network architecture for 5G>

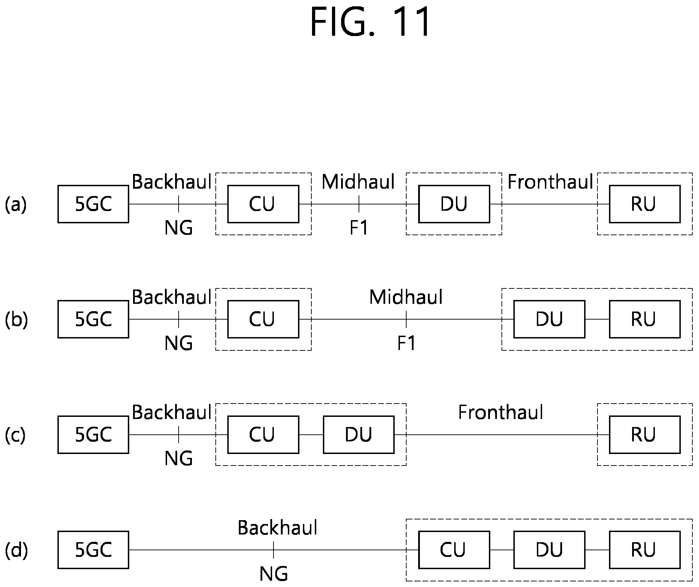

FIG. 11 illustrates transport network architectures for 5G.

ITU-T (Telecommunication Standardization Sector) adopted a transport network architecture for 5G consisting of three logical elements: CU (Centralized Unit), DU (Distributed Unit), and RU (Remote Unit), as shown in (a) of FIG. 11.

In this model, mid and lower layer functions are divided into DU and RU. The RU implements the RF function and possibly also implements the low-PHY and high-PHY functions according to the functional division between the RU and the DU. Depending on network requirements, CU, DU and RU can be grouped in different combinations to form actual physical network elements.

For example, as shown in (b) to (d) of FIG. 11, CU, DU, and RU may be grouped in various combinations This provides flexibility to accommodate different network architectures, applications and transport network requirements.

As in FIG. 11, a transport network between 5GC and CU is called backhaul. The backhaul network implements the 3GPP NG interface. Similarly, the transmission network between CU and DU is called midhaul. The midhaul network implements the 3GPP F1 interface. Finally, the transport network between the DU and RU is called a fronthaul. Backhaul, midhaul, and fronthaul may be collectively referred to as xhaul.

Reconfgurable intelligent surface (RIS)-known also as intelligent reflecting surface (IRS), and large intelligent surface (LIS)-is a programmable structure that can be used to control the propagation of electromagnetic (EM) waves by changing the electric and magnetic properties of the surface.

RISs can be used to sense the radio environment by integrating sensing capabilities into them. By placing intelligent surfaces in the environment where wireless systems are operating, the properties of the radio channels can be controlled at least partially.

Unique capability of RIS may enable a number of benefits, including the potential for enhancing reliability and coverage performance through beamforming or range extension. The ability to control the propagation environment has somewhat changed the conventional wireless system design paradigm, where the radio channel was always seen for the most part as an uncontrollable entity that distorts the transmitted signals. Traditionally the transmitter (TX) and the receiver (RX) were designed to equalize the impact of the channel. Envisioned scenarios vary from cases where a single RIS is placed on a wall to direct signals coming from a predetermined direction.

By using RIS, it is possible to provide the 'transmission effect' of the base station signal through which external signals are transmitted into the building, and to provide the 'reflection effect' of the NLoS (non-line-of-sight) environment, thereby it can improve coverage for shaded areas.

### <Network-controlled repeater in NR>

### (1) Conventional RF repeater

A (conventional) RF repeater is a non-regenerative type of relay node that simply amplifies and forwards everything it receives. The main advantages of RF repeaters are low cost, ease of deployment and no increase in latency. The main drawback is that it can amplify the signal and noise, contributing to increased interference (contamination) of the system.

### (2) Rel-17 WI on RF repeater (RAN4)

RF repeaters are specified in Rel-17 of RAN4 for the FR1 band FDD/TDD and FR2 bands. The Rel-17 Work Item Description (WID) contains only RF requirements. Among the RAN4 WIDs, there is one that is specified as "assuming that the relay does not perform adaptive beamforming toward the UE".

### (3) Rel-18 Network controlled repeater for NR

Coverage is a fundamental aspect of cellular network deployment. Mobile operators rely on various types of network nodes to provide comprehensive coverage. Deploying regular full-stack cells is an option, but may not always be possible (e.g., if there is no backhaul availability) and may not be economically viable.

As a result, a new type of network node has been considered to increase the flexibility of mobile operators' network deployment. For example, Integrated Access and Backhaul (IAB) is a new type of network node that does not require wired backhaul, introduced in Rel-16 and improved in Rel-17. Another type of network node is an RF repeater that simply amplifies and forwards any signals it receives. RF repeaters have been widely deployed in 2G, 3G and 4G to supplement the coverage provided by regular full-stack cells.

RF repeaters provide a cost-effective means of extending network coverage, but have limitations. RF repeaters simply perform amplification and transmission tasks without considering various factors that can improve performance. The factors may include information on semi-static and/or dynamic downlink/uplink configuration, adaptive transmitter/receiver spatial beamforming, ON-OFF states, and the like.

In the network-controlled repeater (NCR), the function of receiving and processing side control information from the network is improved over the existing RF repeater. Side control information allows network controlled repeaters to perform amplification and forwarding tasks in a more efficient manner. Potential benefits may include mitigation of unwanted noise amplification, better spatial orientation transmission and reception, and simplified network integration.

Research on NCR can focus on the following scenarios and assumptions.

NCR is in-band RF repeater used to extend network coverage in the FR1 and FR2 bands, and FR2 deployments can be prioritized for both outdoor and O2I scenarios.

The NCR may be transparent to the UE.

The NCR can simultaneously maintain a base station-repeater link and a repeater-UE link.

Cost effectiveness is a key consideration for NCRs.

It is necessary to study and identify the side control information below.

Beamforming information, timing information for aligning transmission and reception boundaries of network control repeaters, UL-DL TDD configuration information, ON-OFF information for efficient interference management and energy efficiency improvement, power control information for efficient interference management, etc.

Research and identification of the L1/L2 signals (including their configurations) to convey side control information may be required. In terms of management of NCRs, it is necessary to study the identification and authentication of NCRs.

NCR may be considered to be composed of RU and MT.

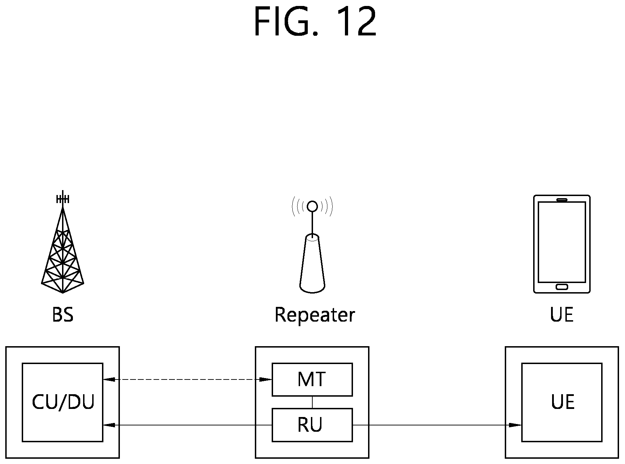

FIG. 12 shows an example of a topology in which an NCR performs transmission and reception between a base station and a UE.

Referring to FIG. 12, a CU and/or DU may exist in a base station, and an NCR may be connected to the base station. NCR may consist of MT and RU.

The RU may be composed of only the RF layer. The RU may receive a signal transmitted by the base station at the RF end and forward it to the UE, and may receive a signal transmitted by the UE at the RF end and forward the signal to the base station.

The RU only relays a signal between the base station and the UE, and cannot generate and transmit a signal/channel by itself to the base station/UE or receive and detect a signal/channel from the base station/UE.

In order to forward the received signal, the RU may consider adjusting the transmission/reception beam direction, DL/UL direction, ON/OFF status, transmission (Tx) power, etc. at the RF end. However, the operation of this RU cannot be determined by the NCR itself and can be completely controlled by the base station.

An MT may include an RF layer and L1, L2, and/or L3 layers. For example, the MT may be composed of only the RF layer and the L1 layer or the L1/L2 layer. Alternatively, the MT may be composed of an RF layer and L1/L2/L3 layers.

The MT may detect/receive a signal/channel transmitted by the base station, and the MT may generate and transmit a signal/channel transmitted to the base station. In addition, the MT may receive information (i.e., side control information) necessary for controlling the operation of the RU from the base station. The MT does not transmit/receive with the UE.

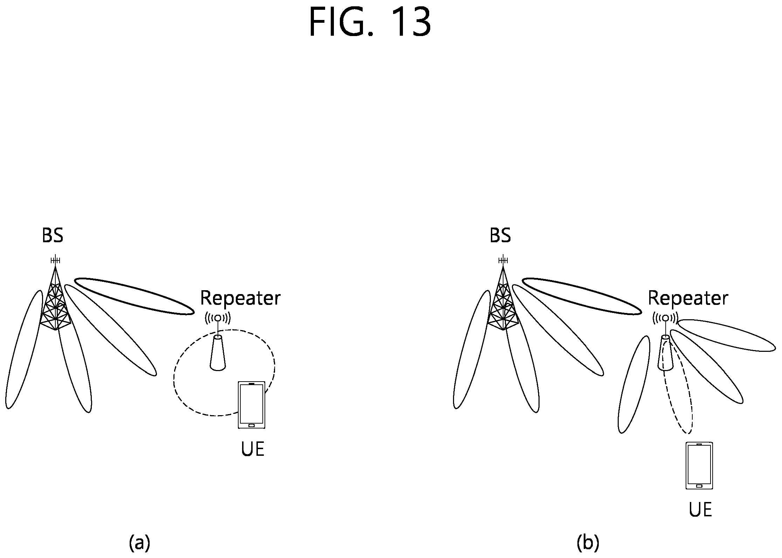

FIG. 13 is a diagram comparing operations of an NCR and an existing RF repeater.

Referring to (a) of FIG. 13, in the case of an existing RF repeater, beamforming is performed in an omni-direction or a fixed direction. On the other hand, in the NCR, a beamforming gain can be obtained by adaptively adjusting the Tx/Rx beam direction of the NCR according to the location of the UE and the channel condition of the UE as shown in (b) of FIG. 13.

In the case of existing RF repeaters, transmission and reception in DL and UL directions were always performed simultaneously because it could not distinguish between DL and UL directions in the TDD system. Alternatively, switching between the DL direction and the UL direction is performed in a predetermined time pattern by applying only a fixed TDD configuration. On the other hand, in the NCR, the NCR may perform DL/UL switching in consideration of TDD configuration. Through this, adaptive DL/UL operation is possible, and power waste and interference caused by forwarding unnecessary signals can be reduced.

In the case of an existing RF repeater, the power of a received signal is always amplified and transmitted regardless of whether a base station or a UE transmits a signal. This wastes power unnecessarily and increases interference to surroundings. In the case of NCR, unnecessary signals may not be transmitted by performing an ON/OFF operation and turning off the operation of the RU when there is no signal to be transmitted to the base station/UE.

In the case of the existing RF repeater, the power of the received signal is amplified at a fixed ratio and transmitted. In the case of NCR, when a signal is transmitted with unnecessarily large power, the effect of interference on the surroundings is reduced by reducing the transmission power of the NCR, and when a signal is transmitted with low power, the signal can be stably transmitted to the receiver by increasing the transmission power of the NCR.

In the case of the existing RF repeater, it operated without knowing the DL/UL slot boundary. On the other hand, in the case of NCR, in order to adaptively adjust beamforming, ON/OFF, DL/UL direction, Tx power, etc. as described above, the NCR needs to know the transmission/reception boundary of DL and UL. Through this, the operation of the RU may be differently applied for each unit time (e.g., slot/symbol).

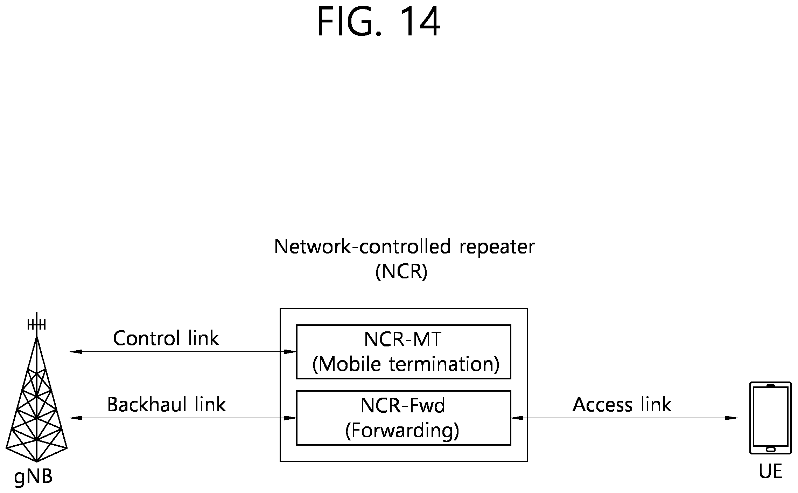

FIG. 14 illustrates a link between a base station, an NCR, and a UE.

Referring to FIG. 14, NCR may include NCR-MT(=MT) and NCR-Fwd(=RU).

An NCR-MT may be defined as a functional entity that communicates with a base station (gNB) via a control link (C-link) to enable information exchange (e.g., side control information). C-Link may be based on the NR Uu interface.

Side control information may be at least information for NCR-Fwd control.

NCR-Fwd may be defined as a functional entity that amplifies and transfers UL/DL RF signals between a base station and a UE through a backhaul link and an access link. The operation of NCR-Fwd is controlled according to the side control information received from the base station.

The contents of the present disclosure are described assuming an operation in NCR. However, the contents of the present disclosure may also be applied to non-NCR devices. For example, the contents of the present disclosure may be applied to the operation of RIS. To this end, the NCR mentioned in this disclosure may be replaced with RIS and expanded/interpreted. In this case, the RU plays a role in forwarding signals from the base station to the UE and forwarding signals from the UE to the base station in the RIS, and the MT may serve to receive side control information for controlling signal transmission of the RU from the base station.

Hereinafter, the term network may be interpreted as being replaced with base station or CU/DU. In addition, the term base station may be interpreted as being replaced with network, CU, or DU.

In the NCR, in order to forward the signal received by the RU, it may be considered that the RF end adjusts the transmission/reception beam direction, DL/UL direction, ON/OFF status, transmission power, and the like. However, the operation of this RU cannot be determined by the NCR itself and can be completely controlled by the base station. To this end, the MT may receive information (i.e., side control information) necessary for controlling the operation of the RU from the base station. At least some or all of this side control information may be conveyed via L1/L2 signaling such as DCI (e.g., DCI format 2_8), MAC-CE.

The side control information may include, for example, all or part of the following information.
1) Beamforming information. This may mean information about the Tx/Rx beam direction of the RU. This information may include beam directions for UL Tx to the base station, DL Rx from the base station, DL Tx to the UE, and/or UL Rx from the UE.
2) Timing information to align transmission/reception boundaries of network-controlled repeater. This may mean information for the RU to align the Tx/Rx slot or symbol boundary.
3) Information on UL-DL TDD configuration. This may mean information on the DL/UL direction of the RU.
4) ON-OFF information for efficient interference management and improved energy efficiency. This may mean information about the ON-OFF operation of the RU.
5) Power control information for efficient interference management. This may mean information on transmission power of the RU. This information may include UL transmission power to the base station and/or DL transmission power to the UE.

At this time, it is necessary to define which beam direction or index of the RU the beamforming information received by the MT through the side control information actually indicates.

When performing adaptive beamforming in an RU-UE link, the side control information of the MT can be utilized to indicate the direction of the RU's transmit and receive beams. This disclosure describes a method for determining which beam this side control information indicates in the access link transmission and reception of the RU.

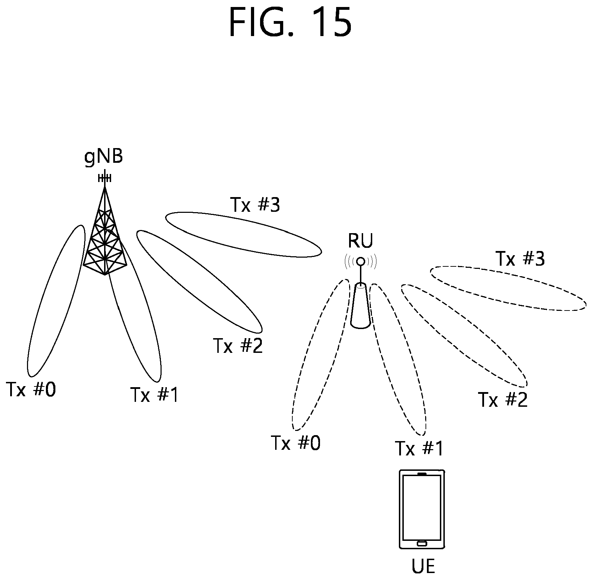

FIG. 15 illustrates the Tx beam direction operated by the gNB (base station) and the Tx beam direction operated by the RU in the NCR topology of a single hop between gNB-NCR-UE.

Referring to FIG. 15, the gNB can operate N_{FH} = 4 Tx beams, and the RU can operate N_{AC} = 4 Tx beams. In this example, the RU can receive the DL signal from the gNB using the Tx beam of Tx#3 of the gNB, and the UE can receive the DL signal from the RU using the Tx beam of Tx#1 of the RU.

The beam pairs of the gNB-MT and/or gNB-RU links can be fixed and configured at the implementation stage, or can be determined through beam adaptation operations between the gNB and the MT. At this time, the method of determining and transmitting the RU's transmission/reception beam for the RU-UE link can be explained, for example, by the following procedure.

Step 1. Report information (N_{AC}) about the number of transmit/receive beams of the RU to the gNB. At this time, the value N_{AC} is reported by the MT to the gNB.

Step 2. The gNB determines and instructs the RU on the beam index information to actually transmit and receive. The MT receives the information from the gNB through side control information.

Step 3. Transmit and receive by applying the beam direction of the RU based on the instructed information.

The beam index can be used to indicate the access link beam.

The following may be supported to convey information characterizing the physical beam of the NCR-Fwd supported for the access link. The information can be made known to gNB and NCR through OAM (Operations, Administration and Maintenance). How beam information is characterized in this option can be implementation-based (e.g., as declared by the NCR supplier). In this option, the beam used for the access link in NCR-Fwd can be configured for gNB and NCR by OAM depending on the implementation. The beam index of the side control information (SCI) can sequentially correspond to the configured beam.

Currently, a beam index-based indication unit has been agreed upon for access link beam indication operation. Specifically, the physical beam generated by the NCR may be configured to inform the gNB and the NCR about that physical beam via OAM, depending on the manufacturer's implementation, and the gNB may ultimately configure it in the form of an index in ascending order to enable beam index-based access link beam direction. For example, if information is provided via the OAM that 19 physical beams of the NCR access link may be generated depending on the implementation, the gNB may appropriately determine which beams within the 19 physical beams can be set as indexes, for example, by configuring a total of 16 beam indexes from #0 to #15.

Depending on the form of periodicity (periodic, aperiodic, semi-persistent), relevant parameters such as period, starting slot/symbol, duration, reference SCS, etc. can be defined and a configuration consisting of these parameters can be provided for periodic, aperiodic, semi-persistent beam direction to the access link.

On the other hand, ON/OFF information has also been discussed to pursue energy efficiency as well as cost effective aspects of NCR. To reduce unnecessary energy consumption, the NCR-Fwd can operate in the OFF state by default. In this OFF state, it can be set to the ON state by performing an access link beam indication (for both FR1/FR2).

There may be cases where operation of the beam is not required while NCR-Fwd is recognized as ON through beam indication. For example, in a CSI-RS/SRS channel measurement situation, if the channel quality has already been secured and no further reference signal transmission is required, operation may not be performed for a specific beam. To accommodate such cases, one might consider dynamically instructing OFF the beam index in the ON state.

Aperiodic beam indications and dynamic OFF indications can be configured in the form of DCI transmitted via PDCCH, which can be received by NCR-MT. In particular, since the dynamic OFF indication operation will target beam indices (of the access link) that are already implicitly ON, one may consider configuring a DCI that combines aperiodic beam indications and dynamic OFF indications.

In this disclosure, considering the above situations, the composition of payload bits of DCI and the interpretation/determination method thereof are described when receiving an aperiodic beam indication for NCR-Fwd or when receiving it in combination with a dynamic OFF indication.

Side control information may be applied differently for each time resource, in which case it is necessary to indicate side control information for each time resource.

When side control information is transmitted via MAC-CE and/or DCI, the side control information may be transmitted via different MAC-CEs and/or DCIs for each time resource unit. In this case, there is a burden of having to transmit side control information for each time resource unit. Considering this, when transmitting side control information once, side control information for multiple time resource units can also be indicated.

In this case, there may be a disadvantage in that side control information for multiple time resource units should be determined and set in advance, but there is an advantage in that efficient signaling becomes possible. To this end, when indicating side control information, information about the time resource to which the indication is applied can be provided together. Alternatively, for multiple time resources (sets), side control information applied to each time resource (set) can be indicated.

In this disclosure, a method for configuring the contents of side control information indicated to an NCR in an FDD environment by considering various side control information in an NCR operating in an NR environment is described.

In this disclosure, a method for indicating various side control information when a gNB indicates to an MT side control information applicable for operation of an RU in a specific time resource for RU operation in NCR is described.

Hereinafter, it is described assuming that all or part of the following information is included and indicated in the side control information. However, other information may also be included and indicated together with the side control information. The information that may be included in the side control information and the operation of the RU according to the information may be as follows.

### 1) Beamforming information

Information about the Tx beam direction and/or Rx beam direction applied by the RU may be included in the side control information and indicated from the gNB to the MT. Beamforming information may include all or part of the following: i) information on the direction of the RU's UL-Tx and/or DL-Rx beams for the gNB-RU link. If the information about the UL-Tx beam direction is indicated, the RU shall perform UL transmission to the gNB in accordance with the indicated UL-Tx beam direction. If the information about the DL-Rx beam direction is indicated, the RU shall perform DL reception from the gNB in accordance with the indicated DL-Rx beam direction. ii) Information on the direction of the RU's DL-Tx and/or UL-Rx beams for the RU-UE link.

### 2) ON/OFF information

Information about whether the RU is operating can be included in the side control information and instructed from the gNB to the MT. When indicated as ON by the ON/OFF information, the RU performs Tx/Rx operations for the gNB-RU link and Tx/Rx operations for the RU-UE link. When indicated as OFF by the ON/OFF information, the RU does not perform Tx/Rx operations for the gNB-RU link and Tx/Rx operations for the RU-UE link.

### 3) DL/UL information

Information about the DL/UL direction of the RU can be included in the side control information and indicated from the gNB to the MT. When DL is instructed by DL/UL information, the RU performs DL reception from the gNB on the gNB-RU link and performs DL transmission to the UE on the RU-UE link. That is, the RU receives a DL signal from the gNB, forwards(transmits) the received signal to the UE. When instructed to UL by DL/UL information, the RU performs UL transmission to the gNB on the gNB-RU link and UL reception from the UE on the RU-UE link, i.e., the RU receives the UL signal from the UE and forwards the received signal to the gNB for transmission.

### 4) Tx power control information

Information about the gain value of the Tx power applied when forwarding and transmitting a signal received by the RU can be included in the side control information and instructed from the gNB to the MT.

Tx power information may include all or part of the following:
i) Information about the UL Tx power gain of the RU for the gNB-RU link.
   When instructed about the UL Tx power gain, the RU performs UL transmission on the gNB-RU link by applying the value (i.e., Rx power * gain) of the UL signal received from the RU-UE link boosted by the gain value compared to the reception power as the UL Tx power according to the instructed gain value.
ii) Information on the RU's DL-Tx power gain for the RU-UE link.

When instructed about the DL-Tx power gain, the RU performs DL transmission on the RU-UE link by applying the DL-Tx power as a value that boosts the power of the DL signal received from the gNB-RU link by the gain value compared to the received power (i.e., Rx power * gain).

### <Method for configuring the contents of side control information>

Below, it is described methods for indicating various pieces of information together when a gNB indicates side control information for the operation of an RU in a specific time resource to an MT.

### 1. Separated indication

Several pieces of information contained in the side control information may be independently indicated from the gNB to the MT. For example, each piece of information may be classified according to the value (state) it may have, as follows

### 1) ON/OFF information.

The value (0 or 1) of the ON/OFF information can be used to instruct the RU to turn ON or OFF as shown in the following table.

**[Table 5]**

| State (index) | 0 | 1 |
|---|---|---|
| ON/OFF information | ON | OFF |

### 2) DL/UL information

As shown in the table below, the DL operation or UL operation of the RU can be indicated depending on the value (0 or 1) of the DL/UL information.

**[Table 6]**

| State (index) | 0 | 1 |
|---|---|---|
| DL/UL information | DL | UL |

Alternatively, the DL operation, UL operation, or flexible operation of the RU may be indicated based on the value (0 or 1) of the DL/UL information as shown in the table below. In this case, flexible may mean that it is not determined whether the RU will operate in DL or UL.

**[Table 7]**

| State (index) | 0 | 1 | 2 |
|---|---|---|---|
| DL/UL information | DL | UL | flexible |

### 3) Beam information

As shown in the table below, the value corresponding to the beam index of the RU can be indicated according to the value of the beam information.

**[Table 8]**

| State (index) | 0 | 1 | 2 | 3 | .. | N-1 |
|---|---|---|---|---|---|---|
| Beam information | beam index 0 | beam index 1 | beam index 2 | beam index 3 | .. | beam index N-1 |

This beam information may be independently indicated for the gNB-RU link and the RU-UE link, or only the RU-UE link may be indicated.

For the gNB-RU link, the beam index may mean the DL Rx beam index in DL resources and the UL Tx beam index in UL resources.

And/or, for RU-UE link, beam index may mean DL-Tx beam index in DL resources and UL Rx beam index in UL resources.

### 4) Transmission (Tx) power control information

As shown in the table below, a value corresponding to the Tx power gain of the RU can be indicated according to the value of the Tx power control information.

**[Table 9]**

| State (index) | 0 | 1 | 2 | 3 | .. | P-1 |
|---|---|---|---|---|---|---|
| Tx power information | Tx power gain 0 | Tx power gain 1 | Tx power gain 2 | Tx power gain 3 | .. | Tx power gain P-1 |

At this time, each Tx power gain value corresponding to Tx power gain 0, 1, ..., P-1 may mean a ratio or dB value of the Tx power to the reception (Rx) power, which indicates how many times the received power will be boosted and transmitted.

Tx power gain may mean UL Tx power gain for a gNB-RU link, and DL-Tx power gain for a RU-UE link.

And/or Tx power gain may mean DL-Tx power gain in DL resources and UL Tx power gain in UL resources.

### 2. Implicit indication

Some information may be implied without explicit indication or may be determined independently of explicit indication.

### 1) ON/OFF information

When an NCR (specifically, an MT of the NCR) is instructed or provided with beam information for a specific time resource, and/or is instructed or provided with DL/UL information, it can determine that the operation of the RU in that time resource is (implicitly) instructed to be ON. That is, the RU performs Tx/Rx operations for the gNB-RU link and Tx/Rx operations for the RU-UE link.

Otherwise, it can be determined that the RU's operation in that time resource is (implicitly) instructed to be OFF, i.e., the RU does not perform Tx/Rx operations for the gNB-RU link and Tx/Rx operations for the RU-UE link.

### 3. Combined indication

Multiple pieces of information included in the side control information can be combined and sent together from the gNB to the MT.
1) Combined indications of DL/UL information and ON/OFF information.

DL/UL information and ON/OFF information for RU can be combined and indicated together.

Method 1. For example, DL/UL information and ON/OFF information can be combined and indicated as shown in the following table.

**[Table 10]**

| State (index) | 0 | 1 | 2 | 3 | |
|---|---|---|---|---|---|
| ON/OFF and DL/UL information | OFF | DL | UL | | flexible |

Referring to Table 10, if a state (index) corresponding to OFF is indicated, the NCR (specifically the MT) can determine that it has been instructed to OFF for RU operation.

If the state (index) corresponding to the DL is indicated, the NCR (MT) may determine that ON is indicated for RU operation. It can also be determined that the RU is instructed to operate as a DL.

If the state (index) corresponding to the UL is indicated, the NCR (MT) may determine that ON is indicated for RU operation. Also, it can be determined that the RU is instructed to operate as an UL.

If the state (index) corresponding to the flexible is indicated, the NCR(MT) may determine that ON is indicated for RU operation. It may also mean that it is undetermined whether the RU will operate as a DL or UL.

At this time, these indications may not include states corresponding to flexible.

Method 2. As another example, DL/UL information and ON/OFF information can be combined and indicated together as shown in the following table.

**[Table 11]**

| State (index) | 0 | 1 | 2 |
|---|---|---|---|
| DL/UL information | DL | UL | flexible |
| ON/OFF information | ON | ON | OFF |

Referring to Table 11, if the state (index) corresponding to the DL is indicated, the NCR (MT) can determine that it is instructed to turn ON for RU operation. It can also be determined that the RU is instructed to operate as a DL.

If the state (index) corresponding to the UL is indicated, the NCR (MT) may determine that ON is indicated for RU operation. Also, it can be determined that the RU is instructed to operate as an UL.

If the state (index) corresponding to flexible is indicated, the NCR(MT) may determine that OFF is indicated for RU operation. If the DL/UL information of the RU is flexible (undetermined), it means that the DL/UL operation of the RU is not certain, which may mean that the RU operation is not performed.

2) Combined indication of DL/UL information and beam information.

DL/UL information and beam information for RU can be combined and indicated together.

Method 1. For example, DL/UL information and beam information can be combined and indicated as shown in the following table.

**[Table 12]**

| State (index) | DL/UL and beam information |
|---|---|
| 0 | DL beam index 0 |
| 1 | DL beam index 1 |
| 2 | DL beam index 2 |
| ··· | ··· |
| N_{D}-1 | DL beam index N_{D} -1 |
| N_{D} | UL beam index 0 |
| N_{D}+1 | UL beam index 1 |
| N_{D}+2 | UL beam index 2 |
| ··· | ··· |
| N_{D}+N_{U}-1 | UL beam index N_{U} -1 |

At this time, if the indication is a beam indication for the gNB-RU link (i.e., for the RU to perform transmission and reception with the gNB), i) if a state (index) corresponding to the DL beam index is indicated, the NCR (MT) can determine that the DL has been instructed for the RU operation. Additionally, the corresponding DL beam index may mean a DL-Rx beam index. The RU receives a DL signal from the gNB using the corresponding DL beam index. And/or ii) if a state (index) corresponding to the UL beam index is indicated, the NCR (MT) can determine that the UL is indicated for RU operation. In addition, the UL beam index can mean a UL-Tx beam index. The RU transmits a UL signal to the gNB using the UL beam index.

Alternatively, if the indication is a beam indication for an RU-UE link (i.e., for the RU to transmit and receive with the UE), i) if a state (index) corresponding to the DL beam index is indicated, the NCR (MT) can determine that the DL has been instructed for RU operation. Additionally, the corresponding DL beam index may mean a DL-Tx beam index. The RU transmits a DL signal to the UE using the corresponding DL beam index. And/or ii) if a state (index) corresponding to a UL beam index is indicated, the NCR (MT) may determine that the UL is indicated for RU operation. In addition, the corresponding UL beam index may mean a UL-Rx beam index. The RU receives a UL signal from the UE using the corresponding UL beam index.

Method 2. Among the bits indicating beam information, 1 bit, which is the most significant bit (MSB) or least significant bit (LSB), can indicate whether the RU operates DL/UL. For example, if the value of the bit is 0, it may indicate that the RU performs a DL operation, and if the value of the bit is 1, it may indicate that the RU performs a UL operation. The remaining bits may indicate the beam index applied by the RU.

If the indication is for an RU-UE link (i.e., for the RU to transmit and receive with the UE), i) if the bit indicating DL/UL information indicates DL, the beam index indicated by the remaining bits may mean a DL-Rx beam index. The RU receives a DL signal from the gNB using the corresponding DL beam index. And/or ii) if the bit indicating the DL/UL information indicates UL, the beam index indicated by the remaining bits may mean a UL-Tx beam index. The RU transmits a UL signal to the gNB using the corresponding UL beam index.

Alternatively, if the indication is a beam indication for an RU-UE link (i.e., for the RU to transmit and receive with the UE), i) if the bit indicating DL/UL information indicates DL, the beam index indicated by the remaining bits may mean a DL-Tx beam index. The RU transmits a DL signal to the UE using the DL beam index. And/or ii) if the bit indicating DL/UL information indicates UL, the beam index indicated by the remaining bits may mean a UL-Rx beam index. The RU receives the UL signal from the UE using the corresponding UL beam index.

3) Combined indications of ON/OFF information and beam information.

ON/OFF information and beam information for RU can be combined and indicated together.

Method 1. For example, ON/OFF information and beam information can be combined and indicated as shown in the following table.

**[Table 13]**

| State (index) | 0 | 1 | 2 | ··· | N-1 | N |
|---|---|---|---|---|---|---|
| ON/OFF and beam information | beam index 0 | beam index 1 | beam index 2 | ··· | beam index N-1 | OFF |

Referring to Table 13, if a state (index) corresponding to OFF is indicated, NCR (MT) can determine that OFF has been indicated for RU operation.

When a state (index) corresponding to the beam index is indicated, the NCR (MT) can be determined to have been instructed to turn ON for RU operation. Additionally, the beam index indicated by the state may mean, i) if the indication is for an RU-UE link (i.e., for the RU to perform transmission and reception with the UE), the DL Rx beam index in DL resources and the UL Tx beam index in UL resources. And/or ii) if the indication is a beam indication for an RU-UE link (i.e., for the RU to transmit and receive with the UE), it may mean a DL-Tx beam index in DL resources and a UL-Rx beam index in UL resources.

Method 2. Among the bits for indicating beam information, 1 bit, which is MSB or LSB, can indicate whether the RU is operating ON/OFF. For example, if the value of the bit is 0, it can indicate that the RU is operating ON, and if the value of the bit is 1, it can indicate that the RU is operating OFF.

The remaining bits, except for the bits indicating ON/OFF information, may indicate the beam index applied by the RU. i) If the indication is for an RU-UE link (i.e., for the RU to perform transmission and reception with the UE), the beam index may indicate a DL Rx beam index in DL resources and a UL Tx beam index in UL resources. And/or, ii) if the indication is a beam indication for an RU-UE link (i.e., for the RU to perform transmission and reception with the UE), the beam index may mean a DL-Tx beam index in DL resources and a UL-Rx beam index in UL resources.

Method 3. Among the beam indices indicated through beam information, a specific beam index (e.g., beam index 0) can indicate the OFF operation of the RU. That is, if the NCR (MT) is instructed as a beam index to apply a specific beam index to the RU, it can be determined that this indicates that the RU operates in OFF mode.

4) Combined indications of ON/OFF information, DL/UL information and beam information

DL/UL information, ON/OFF information and beam information for RU can be combined and indicated together.

Method 1. For example, DL/UL information, ON/OFF information, and beam information can be combined and indicated together as shown in the following table.

**[Table 14]**

| | |
|---|---|
| State (index) | DL/UL, ON/OFF and beam information |
| 0 | DL beam index 0 |
| 1 | DL beam index 1 |
| 2 | DL beam index 2 |
| ··· | ··· |
| N_{D}-1 | DL beam index N_{D} -1 |
| N_{D} | UL beam index 0 |
| N_{D}+1 | UL beam index 1 |
| N_{D}+2 | UL beam index 2 |
| ··· | ··· |
| N_{D}+N_{U}-1 | UL beam index N_{U} -1 |
| N_{D}+N_{U} | OFF |

Referring to Table 14, if a state (index) corresponding to OFF is indicated (i.e., N_{D}+N_{U} is indicated), NCR (MT) can be determined to have been indicated as OFF for RU operation.

When a state (index) corresponding to the beam index is indicated, the NCR (MT) can be determined to have been instructed to turn ON for RU operation.

At this time, if the indication is a beam indication for the gNB-RU link (i.e., for the RU to perform transmission and reception with the gNB), i) if a state (index) corresponding to the DL beam index is indicated, the NCR (MT) can determine that the DL has been instructed for the RU operation. In addition, the corresponding DL beam index may mean a DL-Rx beam index. The RU receives a DL signal from the gNB using the corresponding DL beam index. And/or ii) if a state (index) corresponding to the UL beam index is indicated, the NCR (MT) may determine that UL is indicated for RU operation. In addition, the corresponding UL beam index may mean a UL-Tx beam index. The RU transmits a UL signal to the gNB using the corresponding UL beam index.

Alternatively, if the indication is a beam indication for an RU-UE link (i.e., for the RU to transmit and receive with the UE), i) if a state (index) corresponding to a DL beam index is indicated, the NCR (MT) may determine that DL has been instructed for the RU operation. In addition, the DL beam index may mean a DL-Tx beam index. The RU transmits a DL signal to the UE using the DL beam index. And/or ii) if a state (index) corresponding to a UL beam index is indicated, the NCR (MT) may determine that the UL is indicated for RU operation. In addition, the corresponding UL beam index may mean a UL-Rx beam index. The RU receives a UL signal from the UE using the corresponding UL beam index.

Method 2. Among the bits indicating beam information, 2 bits, which are MSB or LSB, can indicate whether RU is ON/OFF and DL/UL.

One bit of the above two bits can indicate whether the RU is ON/OFF. For example, if the value of the bit is 0, it can indicate that the RU operates ON, and if the value of the bit is 1, it can indicate that the RU operates OFF.

The other bit among the above two bits can indicate whether the RU performs a DL/UL operation. For example, if the value of the bit is 0, it can indicate that the RU performs a DL operation, and if the value of the bit is 1, it can indicate that the RU performs a UL operation.

Alternatively, the above two bits can indicate whether the RU is ON/OFF and DL/UL, as in the ' Combined indications of DL/UL information and ON/OFF information ' proposed above.

Except for the bits indicating whether the RU is ON/OFF and DL/UL, the remaining bits can indicate the beam index applied by the RU.
i) If the indication is for an RU-UE link (i.e., for the RU to perform transmission and reception with the UE), the beam index may mean a DL-Rx beam index in DL resources and a UL-Tx beam index in UL resources.

Alternatively, ii) if the indication is a beam indication for an RU-UE link (i.e., for the RU to transmit and receive with the UE), the beam index may mean a DL-Tx beam index in DL resources and a UL-Rx beam index in UL resources.

5) Combined indications of ON/OFF information and Tx power control information.

ON/OFF information and Tx power control information for RU can be combined and indicated together.

Method 1. For example, ON/OFF information and Tx power control information can be combined and indicated as shown in the following table.

**[Table 15]**

| State (index) | ON/OFF and Tx power control information |
|---|---|
| 0 | Tx power gain 0 |
| 1 | Tx power gain 1 |
| 2 | Tx power gain 2 |
| ··· | ··· |
| M-1 | Tx power gain M -1 |
| M | OFF |

Referring to Table 15, if a state (index) corresponding to OFF is indicated, NCR (MT) can determine that OFF has been indicated for RU operation.

When a state (index) corresponding to the Tx power gain is indicated, the NCR (MT) can be determined to have been instructed to turn ON for RU operation.

At this time, the Tx power gain may mean the UL-Tx power gain for the gNB-RU link and the DL-Tx power gain for the RU-UE link.

If the indication is a Tx power gain for a gNB-RU link (i.e., for the RU to perform UL transmission to the gNB), the Tx power gain may mean a Tx power gain for the UL-Tx power of the RU. In this case, the RU transmits the uplink signal received from the UE to the gNB by applying the corresponding Tx power gain. That is, the RU sets the Tx power as the power boosted by the value corresponding to the Tx power gain compared to the reception power of the received signal and forwards it to the gNB.

If the indication is a Tx power gain for an RU-UE link (i.e., for the RU to perform DL transmission to the UE), the Tx power gain may mean a Tx power gain for the DL-Tx power of the RU. In this case, the RU transmits the downlink signal received from the gNB to the UE by applying the corresponding Tx power gain. That is, the RU sets the Tx power as the power boosted by the value corresponding to the Tx power gain compared to the reception power of the received signal and forwards it to the UE.

And/or Tx power gain may mean DL-Tx power gain in DL resources and UL-Tx power gain in UL resources.

In UL resources, the corresponding Tx power gain may mean the Tx power gain for the UL-Tx power of the RU. In this case, the RU transmits the uplink signal received from the UE to the gNB by applying the corresponding Tx power gain. That is, the RU sets the Tx power as a power boosted by a value corresponding to the Tx power gain compared to the reception power of the received signal and forwards it to the gNB.

In DL resources, the corresponding Tx power gain may mean the Tx power gain for the DL-Tx power of the RU. In this case, the RU transmits the downlink signal received from the gNB to the UE by applying the corresponding Tx power gain. That is, the RU sets the Tx power as the boosted power corresponding to the Tx power gain compared to the reception power of the received signal and forwards it to the UE.

### <Method for indicating various side control information through DCI>

As described above, side control information may be composed of multiple pieces of information. At this time, when these multiple pieces of side control information are indicated from the gNB to the MT, each piece of information may be indicated independently or together. This section specifically describes how multiple side control information is indicated to the MT.

Side control information can be transmitted from the gNB to the MT via MAC-CE and/or DCI. In the following, side control information can also be applied when transmitted via MAC-CE, but for convenience of explanation, it is assumed that side control information is transmitted via DCI.

Side control information for an RU to operate on a specific frequency resource (e.g., a carrier and/or a subband within a carrier) may be indicated from the gNB to the MT via DCI. In this case, multiple pieces of side control information may be indicated, specifically, as follows.

Method 1. Each side control information can be independently indicated.

Method 1-1. When multiple side control information exists, each side control information can be indicated independently of each other. At this time, each side control information can be transmitted through different fields in the DCI. For example, beam information and ON/OFF information can be transmitted through different fields in the DCI. Specifically, multiple side control information for operations on the same RU in the same frequency resource can be transmitted through consecutive fields within the DCI. In this case, each side control information indicated in each field can include information on one or multiple time resource units (e.g., slots).

Method 1-2. A plurality of side control information may be instructed as in method 1-1 above. In this case, when each side control information includes information about one or more time resource units (e.g., slots), there may be a plurality of information about one or more time resource units that each side control information may carry, such that any one of the information may be instructed and applied.

For this purpose, MT may be configured with a set of 'SCI combinations' for specific side control information.

At this time, a SCI combination ID corresponding to each 'SCI combination' is set. Each 'SCI combination' may contain side control information for one or more time resource units. In this case, the MT can be instructed with side control information for one or more time resource units to be applied to the RU by being instructed with the SCI combination ID. When the MT is instructed with the SCI combination ID, the MT can determine that side control information for one or more time resource units in the 'SCI combination' corresponding to the SCI combination ID is applied.

These 'SCI combination' can exist and be set independently for each side control information. For example, 'beam SCI combination' for beam information and 'ON/OFF SCI combination' for ON/OFF information can exist independently. In this case, the MT can be set with a set of 'beam SCI combination's and/or a set of 'ON/OFF information's.

In this case, the SCI combination ID value for each side control information can be indicated through different fields in the DCI. Specifically, multiple side control information for operations on the same RU in the same frequency resource can be transmitted through consecutive fields in the DCI. Alternatively, position information of the DCI field (e.g., 'positionInDCI' (start bit position of the field)) can be indicated for each side control information.

Method 2. Each side control information can be indicated together.

Method 2-1. When multiple side control information exists, the multiple side control information can be indicated through the same field in the DCI via one value. This side control information can include information about one or multiple time resource units (e.g., slots).

There are multiple pieces of information about one or more time resource units that the side control information can have, and one piece of information among the multiple pieces of information can be indicated and applied.

To this end, MT can set a set of 'SCI combinations' for specific side control information. At this time, each 'SCI combination' is set with an SCI combination ID corresponding to the 'SCI combination'. Each 'SCI combination' can include side control information for one or more time resource units. At this time, when there are multiple side control information, each side control information can independently have information about one or multiple time resource units. For example, when there are beam information and ON/OFF information in the side control information, each 'SCI combination' can include the following information.

i) Beam information for one or more time resource units, ii) ON/OFF information for one or more time resource units.

In this case, the MT can be instructed with side control information for one or more time resource units to be applied to the RU by being instructed with the SCI combination ID. When MT is instructed with a SCI combination ID, it can determine that side control information for one or more time resource units in the 'SCI combination' corresponding to the SCI combination ID is applied. Even when multiple side control information exists, one SCI combination ID is indicated, and the side control information corresponding to the indicated SCI combination ID is applied.

### <Method for indicating the side control information in an FDD Environment>

In the case of RF repeaters introduced in the prior art, it was considered that they operate in FR1 FDD/TDD bands and FR2 bands. In the case of NCR, it can also be assumed that they operate in an FDD band as well as a TDD band.
1. DL/UL specific beam indication.

When NCR operates in a TDD band, beam correspondence between DL-Tx beam and UL-Rx beam can be assumed for the access link of NCR-Fwd. For example, when NCR-Fwd performs DL-Tx in a specific beam direction in the access link, it can perform UL-Rx in the same beam direction. In this case, when the NCR-Fwd has performed a DL transmission in a specific beam direction to a specific UE, the UL reception from that UE may apply a UL beam (in the same beam direction) that is beam related/matching to the beam used for the DL transmission.

The corresponding DL beam and UL beam in the access link have the same beam index. The forwarding direction of the beam indicated in the access link can be determined based on the corresponding time domain resource and UL/DL TDD configuration.

That is, when NCR-Fwd is instructed to apply a specific beam index in a specific time resource, the beam index may mean the index of a DL beam if the time resource is a DL resource, and may mean the index of a UL beam if the time resource is a UL resource.

Meanwhile, if NCR operates in an FDD band, NCR-Fwd will use independent RF and antennas for DL and UL carriers, so it may be difficult to assume beam relevance/matching between DL-Tx beams and UL-Rx beams for the access link of NCR-Fwd. In this case, when the NCR-Fwd has performed a DL transmission in a specific beam direction to a specific UE, it is difficult to assume that a UL beam (in the same beam direction) that is beam related/matching to the beam used for the DL transmission can be applied for UL reception from that UE.

Therefore, in the FDD environment, in order for the NCR-Fwd to perform the forwarding operation to the access link, the beam index information needs to be instructed or determined independently for the DL and UL in the case of beam indications that refer to the beam information applied by the NCR-Fwd.

For this purpose, when instructing the beam index information, the beam index information for the DL and the beam index information for the UL may be instructed independently, i.e., the NCR-MT may receive from the gNB the DL beam index information applied to the DL and the UL beam index information applied to the UL independently.

Below, a specific method is described for indicating beam indices for applicable DL and UL and time resources to which the beam indices are applied when NCR-MT is instructed of beam information applicable to the access link of NCR-Fwd from gNB.

Method 1. A DL beam index and/or a UL beam index applied to an access link of NCR-Fwd may be indicated, and information about a time domain resource to which the corresponding beam index is applied may be indicated for each DL beam index and UL beam index. For example, DL beam index #i and UL beam index #j may be indicated, and time domain resource information to which DL beam index #i is applied and time domain resource information to which UL beam index #j is applied may be independently indicated. Such indication may be made for a plurality of DL beam indices and a plurality of UL beam indices. In this case, multiple DL beam indices applied to the access link of NCR-Fwd may be indicated, and information about time domain resources to which each of the DL beam indices is applied may be indicated. And/or multiple UL beam indices applied to the access link of NCR-Fwd may be indicated, and information about time domain resources to which each of the UL beam indices is applied may be indicated.

Method 2. A pair of a DL beam index and an UL beam index applied to the access link of NCR-Fwd may be indicated, and information on a time domain resource to which the corresponding beam pair is applied may be indicated. For example, DL beam index #i and UL beam index #j may be indicated as a pair, and time domain resource information to which the beam pair (DL beam index #i and UL beam index #j) is applied may be indicated. This indication can be made for multiple beam pairs. In this case, multiple pairs of DL beam indices and UL beam indices applied to the access link of NCR-Fwd are indicated, and information about time domain resources to which each beam pair is applied can be indicated for each beam pair. At this time, a specific beam pair may be composed of only a DL beam index or a UL beam index.

Method 3. Continuous time resources may be divided into multiple time resource units, and DL beam index and/or UL beam index information applied to each time resource unit may be indicated.

At this time, each time resource unit can be composed of continuous symbol resources or slot resources. The number (i.e., length) of symbols or slots constituting each time resource unit can be the same for all time resource units. Or, the number (i.e., length) of symbols or slots constituting each time resource unit can be different for each time resource unit.

Method 4. Continuous time resources can be divided into multiple time resource units, and pair information of DL beam index and UL beam index applied to each time resource unit can be indicated.

To this end, for multiple beam pairs, DL beam index and UL beam index information constituting each beam pair can be set in advance. In this case, information on the beam pair applied to each time resource unit (e.g., the index of the beam pair) can be indicated. At this time, a specific beam pair may be composed of only a DL beam index or a UL beam index.

At this time, each time resource unit can be composed of continuous symbol resources or slot resources. The number (i.e., length) of symbols or slots constituting each time resource unit can be the same for all time resource units. Or, the number (i.e., length) of symbols or slots constituting each time resource unit can be different for each time resource unit.

When NCR-Fwd is instructed with DL beam index and/or UL beam index information to be applied to an access link in a specific time resource through the above indications, NCR-Fwd can perform DL transmission by applying a DL beam corresponding to the instructed DL beam index in the time resource, and can perform UL reception by applying a UL beam corresponding to the instructed UL beam index.

When DL beam index information and UL beam index information applied to the access link of NCR-Fwd are independently indicated and dynamically indicated through DCI, the DL beam indication information and the UL beam indication information may be indicated through the same field in the DCI. Or, they may be indicated through different fields in the DCI.

When DL beam indication information and UL beam indication information are indicated through different fields within the DCI, the DL beam indication information and UL beam indication information may be transmitted through consecutive fields. In this case, for example, the position information of the DCI field to which DL beam indication information and UL beam indication information are indicated (e.g., 'positionInDCI' (position of the start bit of the field)) is indicated, and the NCR-MT can determine the position of the DCI field to which DL beam indication information is indicated through the position information of the corresponding DCI field. At this time, the NCR-MT can determine the next field of the corresponding DCI field as the position of the DCI field to which UL beam indication information is indicated.

Alternatively, position information of a DCI field to which DL beam indication information and UL beam indication information are indicated (e.g., 'positionInDCI' (position of start bit of field)) may be indicated. The NCR-MT can determine the positions of the DCI field to which DL beam indication information is indicated and the DCI field to which UL beam indication information is indicated through the position information of the corresponding DCI field.

2. DL/UL specific ON-OFF indications.

When NCR operates in the FDD band, DL and UL operations can be performed simultaneously. In this case, the presence of signals/channels on which NCR-Fwd performs forwarding may differ depending on the DL and UL directions. Therefore, in the case of an ON-OFF indication indicating whether or not to perform forwarding operation of NCR-Fwd in an FDD environment, the ON-OFF information needs to be independently indicated or determined for DL and UL.

To this end, when indicating ON-OFF information as described above, ON-OFF information for DL and ON-OFF information for UL can be independently indicated. That is, NCR-MT can independently receive ON-OFF information applied to DL and ON-OFF information applied to UL from gNB.

Below, a specific method is described for indicating ON-OFF information for applicable DL and UL and time resources to which the ON-OFF information is applied when the NCR-MT is instructed by the gNB to apply ON-OFF information to the access link of the NCR-Fwd.

Method 1. Information about the time domain resources to which 'ON' is applied for the forwarding operation of NCR-Fwd can be indicated. In this case, time domain resource information where DL operation is 'ON' and time domain resource information where UL operation is 'ON' can be independently indicated.

Alternatively, information about time domain resources to which 'OFF' is applied for the forwarding operation of NCR-Fwd may be indicated. In this case, time domain resource information for which DL operation is 'OFF' and time domain resource information for which UL operation is 'ON' may be indicated independently.

Method 2. Continuous time resources are divided into multiple time resource units, and ON/OFF information for DL and UL operations applied to each time resource unit can be indicated. That is, ON-OFF information for DL operations and/or ON-OFF information for UL operations can be indicated for each time resource unit.

At this time, each time resource unit can be composed of continuous symbol resources or slot resources. The number (i.e., length) of symbols or slots constituting each time resource unit can be the same for all time resource units. Or, the number (i.e., length) of symbols or slots constituting each time resource unit can be different for each time resource unit.

When NCR-Fwd is instructed that DL operation is ON (or not OFF) on a specific time resource through the above indications, NCR-Fwd can perform DL forwarding operation on the corresponding time resource. And/or when NCR-Fwd is instructed that UL operation is ON (or not OFF) on a specific time resource, NCR-Fwd can perform UL forwarding operation on the corresponding time resource.

Or when NCR-Fwd is instructed that DL operation is not ON (or OFF) in a specific time resource through the above indications, NCR-Fwd does not perform DL forwarding operation in the corresponding time resource. And/or when NCR-Fwd is instructed that UL operation is not ON (or OFF) in a specific time resource, NCR-Fwd does not perform UL forwarding operation in the corresponding time resource.

Or, when ON-OFF information is indicated in the FDD band, the ON-OFF information can be commonly applied to DL and UL operations. That is, when the NCR-Fwd operation is indicated to be ON (or not OFF) in a specific time resource, the NCR-Fwd can perform forwarding operations for DL and UL in the corresponding time resource. Or, when the NCR-Fwd operation is instructed not to be ON (or OFF) in a specific time resource, NCR-Fwd does not perform forwarding operation for DL and UL in that time resource.

As described above, in time resources where the beam index is not indicated, the operation of NCR-Fwd can be determined as OFF, and in time resources where the beam index is indicated, the operation of NCR-Fwd can be determined as ON. In this case, in an FDD environment, the corresponding method can be applied to DL and UL, respectively. That is, in a time resource where a DL beam index is not indicated, the DL operation of NCR-Fwd can be determined as OFF, and in a time resource where a DL beam index is indicated, the DL operation of NCR-Fwd can be determined as ON. In a time resource where a UL beam index is not indicated, the UL operation of NCR-Fwd can be determined as OFF, and in a time resource where a UL beam index is indicated, the UL operation of NCR-Fwd can be determined as ON.

Alternatively, the operation of NCR-Fwd may be determined as OFF when a specific beam index is indicated for a specific time resource, and the operation of NCR-Fwd may be determined as ON for a time resource to which a different beam index is indicated. In this case, the method may be applied to DL and UL, respectively, in an FDD environment. That is, when a specific DL beam index is indicated for a specific time resource, the DL operation of NCR-Fwd can be determined as OFF, and when a different DL beam index is indicated for a time resource, the DL operation of NCR-Fwd can be determined as ON. When a specific UL beam index is indicated for a specific time resource, the UL operation of NCR-Fwd can be determined as OFF, and when a different UL beam index is indicated for a time resource, the UL operation of NCR-Fwd can be determined as ON.

When the ON-OFF information of DL and the ON-OFF information of UL applied to the access link of NCR-Fwd are independently indicated and dynamically indicated through DCI, the ON-OFF information of DL and the ON-OFF information of UL may be indicated through the same field in the DCI. Or, they may be indicated through different fields in the DCI.

When the ON-OFF information of DL and the ON-OFF information of UL are indicated through different fields within the DCI, the ON-OFF information of DL and the ON-OFF information of UL can be transmitted through consecutive fields. In this case, for example, the position information of the DCI field to which the ON-OFF information of the DL and the ON-OFF information of the UL are indicated (e.g., 'positionInDCI' (position of the start bit of the field)) is indicated, and the NCR-MT can determine the position of the DCI field to which the ON-OFF information of the DL is indicated through the position information of the corresponding DCI field. At this time, the NCR-MT can determine the next field of the DCI field to which the ON-OFF information of the DL is indicated as the position of the DCI field to which the ON-OFF information of the UL is indicated.

Alternatively, the position information of the DCI field indicating the ON-OFF information of the DL and the ON-OFF information of the UL (e.g., 'positionInDCI' (position of the start bit of the field)) may be indicated. The NCR-MT can determine the positions of the DCI field indicating the ON-OFF information of the DL and the DCI field indicating the ON-OFF information of the UL through the position information of the corresponding DCI field.

The above ON-OFF information of DL may include ON-OFF information of DL and information on time domain resources to which the information is applied. In addition, ON-OFF information of UL may include ON-OFF information of UL and information on time domain resources to which the information is applied.

Below, the operation and DCI for activating/deactivating these configurations when semi-statically setting side control information when operating NCR in an NR environment are described.

### <Signaling for side control information>

Periodic, semi-persistent and aperiodic indications may be supported for signaling access link beam indications.

### 1. Periodic configuration

In the case of periodic configuration, the beam index and the periodic time resource information to which the beam is applied can be set by RRC signaling. To this end, the time resource to which the beam is applied can be set for each beam through one configuration for multiple beams.

A time resource is composed of a continuous symbol resource defined by a starting time and a duration, and may exist periodically. In this case, it may be a question whether one beam index is mapped to one time resource or can be applied to multiple time resources.

The main purpose of the periodic setup is to set beam information for transmission of semi-static and periodic signals/channels, where different semi-static and periodic signals/channels can be transmitted in the same beam direction. For example, when SSB and SIB1 are transmitted in the same beam direction, the time resource corresponding to the SSB transmission resource and the time resource corresponding to the SIB1 transmission resource should be set to be transmitted in the same beam direction. Considering this, one beam index can be mapped to multiple time resources.

Regarding the periodicity of time resources, it is necessary to clarify whether all time resources within a periodic configuration have the same period or whether each time resource can have a different period.

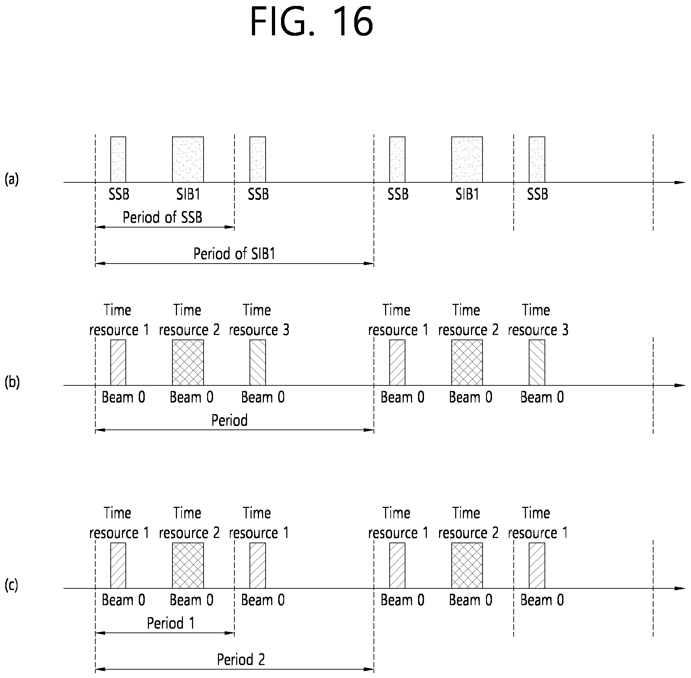

FIG. 16 illustrates time resources having a period.

Referring to (a) of FIG. 16, let us consider setting time resources for SSB and SIB1 transmissions that are transmitted with different periods in the same beam direction (e.g., beam #0). In order to set the transmission resources of SSB and SIB1 to have the same periodicity, the time resources should be set to match a multiple of the periods of SSB and SIB1, as in (b) of FIG. 16. Therefore, it is necessary to set three time resources having the same period. Meanwhile, if each time resource can have an independent period, two time resources having different periods can be set, as in (c) of FIG. 16.

### 2. Semi-persistent configuration (semi-static configuration)

In the case of setting up semi-persistent side control information, it is mainly necessary for beam indication in time resources where channels where transmission is performed semi-persistently, such as SPS (Semi Persistent Scheduling)-PDSCH and CG (configured grant)-PUSCH, are forwarded. Considering that the transmission of these semi-persistent channels is configured by RRC and activated/deactivated by MAC-CE or DCI, it is necessary that the semi-persistent configuration of side control information is configured by RRC and activated/deactivated at least by DCI.

The method in the above periodic configuration can be applied to set such semi-persistent side control information.

Additionally, these SPS PDSCH and CG-PUSCH are configured UE-specifically, and multiple configurations can be configured for the same UE and activated/deactivated per configuration unit. Considering these points, NCR-MT may be configured with multiple semi-persistent configurations of side control information and may require an operation to activate/deactivate them on a per-configuration basis.

When semi-persistently setting side control information, a configuration index value can be set for each configuration for the operation of activating/deactivating the semi-persistent configuration unit of side control information.

### 3. Aperiodic indication

The NCR may support aperiodic indication of the access link beam and the time resources corresponding to the beam by DCI signalling.

For beam indication for a time resource over which a specific signal/channel is transmitted, an operation may be supported in which a beam index and the time resource to which the beam is applied are indicated via DCI.

Meanwhile, an operation of indicating multiple beam indices and the time resource to which each beam index is applied may also be supported through a single aperiodic beam indication. When multiple signals/channels are forwarded sequentially, such as PDCCH-PDSCH-PUCCH transmission and PDCCH-PUSCH transmission, it may be more efficient to signal beam indications for transmission resources of each channel at once rather than individually signaling them. This behavior can also be useful when signals/channels for different UEs are transmitted over adjacent time resources.

### <DCI for activating/deactivating semi-persistent side control information>

Two DCIs may be required for side control information for the operation of NCR-Fwd: one DCI carrying aperiodic side control information, and the other DCI for activating/deactivating the configuration of semi-persistent side control information.

DCI carrying aperiodic side control information may contain the following fields:

### 1) Beam/OFF indication field.

Beam indication and OFF state indication can be supported through aperiodic side control information. In this case, the beam indication and OFF state indication can be combined and indicated through a single DCI field (e.g., beam/OFF indication field) instead of being indicated separately.

### 2) Time resource indication field.

A time resource indication field may be included to indicate the time resource to which the beam/OFF indication applies. This field can indicate a time resource consisting of consecutive symbols by indicating the starting symbol position and symbol length.

To support beam and OFF state indications for multiple time resources, multiple time resource indication fields can be present.

### 3) HARQ-ACK for DCI related fields.

To support feedback of HARQ-ACK for PDCCH carrying side control information, for example, the DCI may include all or some of the following fields:
i) Time domain resource allocation, ii) PDSCH-to-HARQ_Feedback timing indicator, iii) PUCCH resource indicator, iv) downlink allocation index.

The setting of semi-persistent side control information is performed by RRC signaling/message and can be activated/deactivated on a per-configuration basis by DCI. The following information can be indicated via DCI for activating/deactivating the configuration of semi-persistent side control information:
i) Configuration index field: In order to perform activation/deactivation on a configuration basis for semi-persistent side control information, an index for the configuration to which the activation/deactivation indication applies should be indicated.
ii) Activation/deactivation indication field: This may be a field that indicates whether the configuration index indicated through the configuration index field is activated or deactivated.
iii) HARQ-ACK for DCI related fields: For stable forwarding operation of NCR-Fwd, NCR-Fwd can perform HARQ-ACK feedback for DCI reception so that gNB can determine whether NCR-MT has received DCI for activating/deactivating semi-persistent side control information. For this purpose, all or some of the fields such as time domain resource allocation, PDSCH-to-HARQ feedback timing indicator, PUCCH resource indicator, downlink allocation index may be required.

The DCI format for DCI for activating/deactivating semi-persistent side control information can be as follows.

Approach 1. A separate DCI format different from the DCI for side control information (first DCI) may be used for DCI (second DCI) for activating/deactivating semi-persistent side control information. In this case, the second DCI may include all or part of the DCI fields as proposed above.

Approach 2. A separate DCI format can be used for the DCI (second DCI) for activating/deactivating the semi-persistent side control information, different from the DCI for the side control information (first DCI). In this case, if the DCI format is used for activating/deactivating semi-persistent side control information, some or all of the DCI fields may be configured or interpreted differently compared to when the DCI is for side control information.

For example, for the same DCI format, the fields composing the DCI format may be interpreted differently when used as a DCI for activating/deactivating semi-persistent side control information (second DCI) and when used as a DCI for side control information (first DCI). That is, it can be determined that the DCI fields are configured differently depending on whether the UE determines that the DCI format is used as the second DCI or as the first DCI. At this time, it can be assumed that some DCI fields exist in common for the two DCIs (the first DCI and the second DCI), and it can be determined that only some of the remaining DCI fields are interpreted differently. For example, for fields required to feed back HARQ-ACK for DCI, it can be determined that they exist in common for both DCIs.

As another example, fields of a DCI format may be configured based on a case where the same DCI is used to indicate side control information, but some fields may be interpreted differently when the DCI format is used as a DCI for activating/deactivating semi-persistent side control information.

The beam indication field or the beam/OFF indication field can be used to indicate the configuration index. In this case, the NCR-MT can determine that the configuration index value is indicated through the beam/OFF indication field.

The time resource indication field can be used to indicate whether to activate or deactivate. In this case, NCR-MT can determine whether activation or deactivation is indicated by the value indicated by the time resource indication field.

In order for NCR-MT to distinguish between the first DCI and the second DCI, CRC scrambling may be performed with a different RNTI from that of the first DCI in the case of the second DCI.

The base station instructs NCR-MT to set up semi-persistent side control information through RRC. Thereafter, the base station instructs NCR-MT to activate/deactivate the configuration information of semi-persistent side control information through DCI (e.g., the second DCI described above).

NCR-MT receives configuration information of semi-persistent side control information from the base station via RRC. Thereafter, NCR-MT receives activation/deactivation information of configuration information of semi-persistent side control information from the base station via DCI (e.g., the second DCI described above).

When NCR is instructed to activate the configuration of specific semi-persistent side control information, it applies the corresponding semi-persistent side control information to perform the forwarding operation of NCR-Fwd. When NCR is instructed to deactivate the configuration of specific semi-persistent side control information, it does not apply the corresponding semi-persistent side control information for the forwarding operation of NCR-Fwd.

Below, a method of interpretation/determination of the DCI field is described when an aperiodic beam indication and/or a dynamic OFF indication of an access link are received in combination in the NCR when the NCR operates in an NR environment.

The contents of this disclosure are described assuming operation in NCR. However, the contents of this disclosure can also be applied to devices other than NCR. In particular, the contents of this disclosure can be applied for operation in RIS. For this purpose, the NCR mentioned in the present disclosure may be replaced with RIS and extended/interpreted. In this case, the RU may perform the role of forwarding a signal from the gNB to the UE and forwarding a signal from the UE to the gNB in the RIS, and the MT may perform the role of receiving side control information from the gNB for controlling signal transmission of the RU.

In the present disclosure, the term "network" may be interpreted as being replaced with gNB or CU/DU. In addition, the term "gNB" may be interpreted as being replaced with network, CU, or DU.

In this specification, the RU of NCR (i.e., NCR-RU) may be represented as NCR-Fwd. That is, the RU described in the present disclosure may be interpreted as a replacement for the existing NCR-RU and NCR-Fwd, and may be used interchangeably with the same meaning. The link between gNB and NCR-MT can be denoted as a control link or c-link, the link between gNB and NCR-Fwd can be denoted as a backhaul link, and the link between NCR-Fwd and UE can be denoted as an access link.

NCR-MT can be defined as a functional entity that communicates with the gNB over the control link (C-link) to enable information exchange (e.g. side control information). The C-link can be based on the NR Uu interface. The side control information is at least for NCR-Fwd control.

NCR-Fwd can be defined as a functional entity that performs UL/DL RF signal amplification and forwarding between gNB and UE through backhaul link and access link. The operation of NCR-Fwd is controlled according to side control information received from gNB.

NCR goes beyond the limitations of existing repeaters that simply amplify and transmit signals, and enables more intelligent RU operation control. To this end, MT is newly introduced to exchange side control information between gNB and MT, enabling RU operation control.

Accordingly, compared to existing repeaters, NCR may have the feature of being able to perform adaptive beamforming in RU-UE links using side control information. However, as the cost-effectiveness of NCR is emerging as an important factor, it may be difficult for MT to have full control capabilities like gNB.

In other words, in order to perform adaptive beamforming for transmission and reception of RU in the RU-UE link where NCR is installed, there is a characteristic that the decision of the gNB should be followed. More specifically, the direction of the transmit beam that the RU applies when forwarding signals received from the gNB to the UE and the direction of the receive beam that the RU applies when forwarding signals received from the UE towards the gNB are both determined by the gNB, and information on which transmit and receive beams the RU actually applies may be provided to the MT by the gNB as side control information.

In NCR, in order to forward the signal received by the RU, it may be considered to adjust the transmit/receive beam direction, DL/UL direction, ON/OFF, Tx power, etc. at the RF end. However, the behavior of these RUs cannot be determined by the NCR itself and can be entirely controlled by the gNB. To this end, the MT can receive information (i.e., side control information) required to control the operation of the RU from the gNB. This side control information can be delivered via L1/L2 signaling such as MAC-CE and DCI.

The following describes specific methods for interpreting the related DCI when the NCR receives an aperiodic beam indication and/or combines it with a dynamic OFF indication to perform dynamic beam operation on the access link of the NCR-Fwd. This may be used, for example, for the following purposes.
1) When the NCR supporting aperiodic beam direction has the capability of dynamic OFF operation and the gNB is aware of this,
2) When receiving an aperiodic beam indication alone or when receiving an aperiodic beam indication in combination with a dynamic OFF indication,
3) To correctly interpret/determine the DCI field so that waste of DCI field does not occur within the limited DCI payload bits and to perform the dynamic beam operation of NCR-Fwd normally.

Considering the above purpose, the method to be applied when receiving an aperiodic beam indication supported by NCR is specifically described. Additionally, considering that NCR may support dynamic OFF operation, the configurable DCI information of dynamic OFF indications, how to interpret it, and how to interpret/determine it when received in the form of DCI combining aperiodic beam indications and dynamic OFF indications are specifically described.

### <NCR operation procedure when receiving aperiodic beam indication and dynamic OFF indication>

When NCR-MT receives and interprets DCI related to aperiodic beam indications from gNB, NCR-Fwd can perform dynamic beam operations accordingly through the access link. This DCI information can be included in the side control information and received by NCR-MT through the control link from gNB.

Based on the information obtained by interpreting the DCI for the aperiodic beam indication of the access link received from the gNB, the NCR-MT performs dynamic beam operation on the indicated beam index and the time resource mapped to it for the access link of the NCR-Fwd.

That is, NCR-MT can obtain aperiodic beam indication information by receiving DCI for aperiodic beam indication from gNB. Based on this, NCR can determine beam index information associated with each time resource. Based on this information, NCR-Fwd performs transmit/receive operations in the beam direction corresponding to the associated beam index for each time resource.

More specifically, dynamic beam operation in the access link of such NCR-Fwd is possible by interpreting the fields included when the NCR-MT receives the DCI of aperiodic beam indication from the gNB.

Representative DCI information that requires such interpretation includes, for example, L fields composed of beam information and T time resource information fields containing time resource information for the L beam information. Each beam information field can indicate one beam index information. More specifically, there may be an associated time resource for each beam index indicated by each field of the L beam information fields. The field in the DCI that represents that time resource is called the time resource information field and can consist of T fields. Here, T may take two forms.
i) When one beam information field has one mapped time resource information field (i.e., T=L).
ii) Or, there may be only one time resource information field, and that field has multiple time resource information (i.e. T=1).

For example, each of the L beam information fields can be mapped to a bit value in the bit-width of one time resource information field. These bit values may be pointers indicating to one of the pre-defined time resources listed by RRC signaling. Accordingly, the beam index pointed to by any beam information field can have its start time, slot/symbol offset, duration, etc. determined according to the time resource information field information associated with it.

On the other hand, if NCR operates in the OFF state, it may mean that there is no beam indication for a specific time resource. Or, conversely, if there is a beam indication for NCR for a specific time resource, it can be implicitly determined that the time resource is ON.

In this way, when there are time resources that the NCR determines to operate in the ON state by receiving a beam indication, a dynamic OFF indication can be received instructing to perform an OFF operation for some of the time resources. At the time of application indicated by the dynamic OFF indication received by NCR-MT, NCR-Fwd can operate OFF, which does not perform forwarding operation. This is the basic operation procedure of the dynamic OFF indication.

The DCI of an aperiodic beam indication may contain other information besides beam information and its time resource information. That is, there may be additional fields in the DCI, such as MCS (Modulation and coding scheme), TPC (Transmit Power Control), NDI (New data indicator), RV (Redundancy Version), etc.

In the following, we do not exclude the possibility of additional field configurations in the DCI of aperiodic beam indications, but to clarify the proposed method, we describe an example where the DCI includes a beam information field and a time resource information field (or a combination thereof) which is time resource information related to the beam. Even if there are other fields in the DCI other than the beam information field and the time resource information field, the methods proposed in this disclosure can be equally applied.

Below, we specifically describe how an NCR that receives aperiodic beam indications or dynamic beam indications interprets DCI information.

### <Method of interpretation when receiving DCI containing aperiodic beam indications>

Dynamic beam operation on the access link of NCR-Fwd is possible by receiving aperiodic beam indications. When the number of physical beams supported by NCR and the number of beam indices that can be configured among N_{AC} is N (N≤N_{AC}), the operation can be performed as follows.

NCR-MT receives an aperiodic beam indication for the access link from the gNB. The above aperiodic beam indication may consist of one DCI information per indication. NCR-MT can interpret the bit values of the DCI field according to this DCI configuration. Specifically, it interprets a list of L beam information fields that can represent up to N beam indices of the DCI information and the time resource information fields mapped to them. In particular, when the NCR-MT receives an aperiodic beam indication, it refers to L beam information fields separated by a bit-width, where a bit-width can be interpreted as ceil(log₂N) bits representing N access link beam indices. (However, when N=1, the bit width is interpreted as 1 bit.) Here, ceil(x) computes the smallest integer that is greater than or equal to x.

At this time, each of the L beam information fields can be expressed as a bit value that determines the beam index, which is the access link beam operation unit of NCR-Fwd, according to the allocated bit width. For example, if the bit width is 2 bits, up to 4 beam indices can be represented by 4 bit values {00, 01, 10, 11}.

When NCR-MT interprets the beam information field, it can determine the beam index of the access link of NCR-Fwd and obtain the timing information for performing dynamic beam operation of the access link of NCR-Fwd according to the time resource mapped to it. Thereafter, in the access link of NCR-Fwd, dynamic beam operation is performed according to the beam index information interpreted/determined by NCR-MT and the start time, slot/symbol offset, duration, etc. of the time resource mapped to it.

In the dynamic beam operation execution procedure of the access link of NCR-Fwd, considering the limited DCI payload size received by NCR-MT, the interpretation of DCI information may differ depending on how the bit-width size allocated to the beam information field expressing N beam indices is defined.

This means that defining a larger bit-width allows for fewer values of L to form a list of beam information fields, while defining a smaller bit-width allows for more values of L, the number of candidates that can indicate the beam, and thus more freedom to form a large list of beam information fields.

In addition, the maximum number of DCI payload bits generally known in 5G standard technology is 140 bits excluding CRC. Therefore, fields should be configured within the limited DCI payload size. In the DCI information of the aperiodic beam indication, it is assumed that two fields, L beam information fields and T time resource information fields (where T=L or T=1) mapped to them, are determined by considering the DCI payload size.

Considering the limitation of the DCI payload size, the number N of beam indices of the access link, which is a factor defining the bit width of the beam information field, can be interpreted in the following ways.

Method 1. NCR can be determined by interpreting N according to the number set by gNB.

The above N value has a characteristic that can affect the DCI payload size. Therefore, setting the N value to a configurable value rather than fixing it can be more efficient in configuring DCI information. That is, in the case of a fixed N value, the receiving NCR-MT should always interpret it according to a constant bit-width regardless of the structure of the DCI field, whereas in the case of a configurable N value, there is flexibility to reduce unnecessary bit waste.

For example, if N is fixed to 16 and interpreted, each beam indication field should be interpreted in 4-bit units regardless of the optimal value. However, if it is possible to set/reset within N={2,4,8,16}, the bit width to be interpreted for each beam indication field can be flexibly adjusted according to the N value set to 1,2,3,4 bits.

For this purpose, the network can set the value of N to NCR-MT. That is, NCR-MT can receive the value of N from the network. This configuration can be indicated through RRC signaling, etc. Based on this, NCR-MT can determine the bit width of the beam indication field.

The NCR-MT can receive aperiodic beam indications from the gNB and determine a beam index corresponding to each bit value for each bit-width unit of ceil(log₂N) bits for L beam information fields of the DCI information. To configure such bit-width units without waste, one could consider a method to have the corresponding N value set/reset by the gNB so that it does not exceed the DCI payload size limit.

For example, if a gNB wants to configure the number of beam indices as N=16 and L=16 beam information fields, and the payload size allowed for the fields is 60 bits (i.e., ceil(log₂N) * L = 64 bits, thus exceeding 60 bits), NCR-MT can be reset to N=15 (i.e., ceil(log₂N) * L = 60 bits). As another example, if gNB wants to configure the number of beam indices as N=8 and L=8 beam information fields and the allowable payload size of the corresponding fields is 24 bits, NCR-MT can set N=8 as it is and apply it.

When NCR-MT receives aperiodic beam indications, if it knows the number of beam indices of the access link, i.e. the set of beams of the access link, it can apply this as the N value. That is, when the NCR-MT is set to multiple access link beams that can be indicated through aperiodic beam indications, the number of the corresponding access link beams can be determined as N.

For example, when NCR-MT receives an aperiodic beam indication, if it contains 16 beam indices of the access link, it can be determined as N=16 and applied.

When the NCR-MT determines that a specific beam index is indicated according to the above operation procedure, it can interpret the time resource information mapped to the corresponding beam index. At this time, the gNB can set/reset the N value by also considering the DCI payload size determined by T=L or T=1, and NCR-MT can interpret that value as N.

Method 2. NCR can be determined by interpreting N as a fixed value or default value.

If NCR cannot determine the information that gNB wants to set or intentionally does not set it, N can be defined and interpreted as a fixed value or default value.

The NCR-MT can receive aperiodic beam indications from the gNB and determine a beam index corresponding to each bit value for each bit-width unit of ceil(log₂N) bits for L beam information fields of the DCI information. At this time, NCR can define and apply a fixed value for the N value that can maximize the use of the payload size.

One method is to configure the L beam information fields as many times as possible (Lₘₐₓ=N) within the allowed payload size, and define N with the largest value as a fixed value (ceil(log₂N) * N bits is the maximum within the allowed payload size). However, the value of N cannot be greater than N_{AC}, which is the number of beams physically supported in the access link of NCR.

For example, if the predefined payload size limit of the beam information field is 55 bits, NCR-MT may determine the number of available beam indices as 13 (i.e., 52-bit payload) based on the condition ceil(log₂N) * N bits≤55 bits and apply a fixed value of N=13.

If NCR-MT has difficulty in determining the N value for some reason, a method of pre-defining a default value can be considered to ensure minimal aperiodic beam indication operation. If the N value to be set according to the FR1 or FR2 band cannot be interpreted, NCR-MT can apply the N defined as the default value.

Considering that the number of beams may be large in the FR2 band, the number of beams supported by NCR (N=N_{AC}) can be applied as the default value. On the other hand, considering that the number of beams in the FR1 band may be relatively small or may be an onmi-directional signal, the default value can be applied as N=1. Or, the default value can be applied as N=1 regardless of the frequency band FR1/FR2.

When NCR-MT determines that a specific beam index is indicated, it can interpret the time resource information mapped to the beam index. At this time, the DCI payload size determined according to T=L or T=1 can also be considered, and a fixed or default value of N can be defined as in the above operation method, and NCR-MT can interpret that value as N.

The above-described method may have a problem of lacking flexibility in that it is interpreted by maintaining a predefined value, whether a fixed value or a default value. However, it has the advantage of not requiring additional signaling in that it is fixed to a promised value without separate configurations.

The above methods can be applied independently, but multiple methods can be applied together depending on the situation. For example, if N is interpreted as a fixed value as described in Method 2 above, but the gNB can set the value of N, the new interpretation of N can be applied in the same form as Method 1.

Based on the above proposed method, the dynamic beam operation of NCR can be performed/expected as follows.
1. NCR-MT receives DCI for aperiodic beam indication from gNB and obtains aperiodic beam indication information. Based on this, NCR determines beam index information associated with each time resource. Based on this information, NCR-Fwd performs transmission/reception operation (i.e., dynamic beam operation) in the beam direction corresponding to the beam index associated with each time resource.
2. The DCI for the above operation includes L beam information fields.
   One beam index among N beam indices can be indicated through each beam information field. The bit width of each beam information field can vary depending on the value of N. For example, NCR-MT can determine the bit width of each beam information field as ceil(log₂N) (however, when N=1, the bit width is interpreted as 1 bit).
3. In the above operation, NCR-MT needs to know the bit width to interpret the beam information field, and for this, it needs to know the N value. To this end, NCR-MT determines the N value using at least one of the proposed methods described above.

### <NCR's DCI interpretation method supporting dynamic OFF operation>

Looking at the dynamic OFF operation procedure in the access link of NCR-Fwd, NCR-MT may receive dynamic OFF indication from gNB for time resources determined to be in the ON state. NCR does not perform forwarding operation for time resources for which dynamic OFF indication is received.

To perform the dynamic OFF operation of NCR-Fwd, the bit value of the beam information field in the DCI information of the aperiodic beam indication received by NCR-MT can be expressed by combining the access link beam index and the number of OFF states of the corresponding beam index. That is, among the values indicated through the beam indication field, a specific value(s) may mean an OFF state indication rather than a beam index. Or, among the beam indices indicated through the beam indication field, a specific beam index(es) may mean an OFF state.

For dynamic OFF indications, the DCI can be configured in a similar form as the aperiodic beam indication, but with a different interpretation of the bit-width for the beam information field.

Meanwhile, an NCR operating with TDD basically have a single OFF state. That is, if a beam index is performing beam operation regardless of UL/DL (implicit ON state), there is only one OFF state that can be had for that beam index. That is, if the NCR is instructed to be OFF for a specific time resource, it may not perform forwarding operation regardless of UL/DL operation on that time resource.

We can consider an NCR that performs FDD operation in a paired spectrum environment. The NCR can perform forwarding operations for DL and UL simultaneously in an FDD environment, or independently. The NCR can determine that the forwarding operation is ON in a resource that has been instructed to receive beam indications. In this case, the forwarding operation can be determined to be ON for both DL and UL.

However, since the presence or absence of forwarding signaling for DL and UL in a particular time resource is independent, NCR may need to perform forwarding operation only for a specific direction among DL and UL and not perform forwarding operation for the other direction. That is, NCR may perform OFF operation (not perform forwarding operation) only for DL operation or UL operation in a specific time resource, or may not perform OFF operation for both DL and UL operation. In particular, if we assume that the ON state is only when the UL/DL beams operate simultaneously, the OFF state in the NCR operating with this type of FDD can be one of three: {UL only OFF, DL only OFF, UL/DL both OFF}. That is, if NCR is instructed to 'UL only OFF' for a specific time resource, it may not perform forwarding operation for UL operations. If NCR is instructed to ' DL only OFF ' for a specific time resource, it may not perform forwarding operations for DL operations. If NCR is instructed to ' UL/DL both OFF ' for a specific time resource, it may not perform forwarding operations for both DL and UL operations.

Therefore, when the number of branches expressing the OFF state of an NCR supporting dynamic OFF operation is k, the operation can be performed as follows.

NCR-MT receives a dynamic OFF indication of an access link from gNB. The dynamic OFF indication may consist of one DCI information per indication. NCR-MT may interpret the bit values of the DCI field according to this DCI configuration. More specifically, it interprets L beam information fields that can express up to N beam indices among DCI information and time resource information fields mapped thereto. In particular, when NCR-MT refers to L beam information fields separated by bit-width units upon receiving a dynamic OFF indication, the bit-width can be interpreted as ceil(log₂(N+k)) bits that can express N access link beam indices and k OFF states.

In the OFF state defining the above k value, the number of cases may be different in the NCR operating in TDD and the NCR operating in FDD as described above.

When operating in TDD, in NCR, there is only one case, k=1, for the ON state in which the beam is operating, regardless of UL/DL, when the OFF state is active. In other words, if NCR-Fwd is instructed to operate OFF in a specific time resource, NCR-Fwd does not perform forwarding operation in that time resource.

On the other hand, when operating as FDD, since it is assumed that a case where both UL and DL are operating is the ON state, it can be interpreted as a total of three cases, i.e. k=3, such as a state where only UL is OFF (i.e., DL only ON), a state where only DL is OFF (i.e., UL only ON), and a state where both UL and DL are OFF. If NCR-Fwd is instructed to 'UL only OFF' in a specific time resource, NCR-Fwd does not perform UL forwarding operation in that time resource. If NCR-Fwd is instructed to 'DL only OFF' in a specific time resource, NCR-Fwd does not perform DL forwarding operation in that time resource. When NCR-Fwd is instructed to 'UL/DL both OFF' in a specific time resource, NCR-Fwd does not perform forwarding operations for UL and DL in that time resource.

Or, when operating as FDD, the OFF state can be expressed as two states: DL OFF and UL OFF. In this case, it can be interpreted as k=2. If NCR-Fwd is indicated as 'UL OFF' in a specific time resource, NCR-Fwd does not perform UL forwarding operation in that time resource. If NCR-Fwd is indicated as 'DL OFF' in a specific time resource, NCR-Fwd does not perform DL forwarding operation in that time resource. When NCR-Fwd is instructed to both 'DL OFF' and 'UL OFF' in a specific time resource, NCR-Fwd does not perform any forwarding operations for DL and UL.

At this time, each of the L beam information fields can be expressed as a beam index, which is an access link beam operation unit of NCR-Fwd, and a bit value that determines the OFF state of the corresponding beam index according to the allocated bit width. For example, if the bit width is 3 bits, for TDD NCR, up to 7 beam indices and 1 OFF state for each index and for FDD NCR, up to 5 beam indices and 3 OFF states for each index can be expressed within 8 bit values {000, 001, 010, 011, 100, 101, 110, 111}.

When NCR-MT interprets the beam information field, it can determine the beam index of the access link of NCR-Fwd and obtain the timing information for performing a dynamic OFF operation of the access link of NCR-Fwd according to the time resource mapped to it. Afterwards, in the access link of NCR-Fwd, a dynamic OFF operation is performed based on the beam index information interpreted/determined by NCR-MT and the start time, slot/symbol offset, duration, etc. of the time resource mapped to it.

In the procedure of performing dynamic OFF operation of the access link of NCR-Fwd, considering the limited DCI payload size received by NCR-MT, the interpretation of DCI information may vary depending on how the bit-width size allocated to the beam information field expressing k OFF states with N beam indices is defined.

This means that the larger the bit-width is defined, the smaller the value of L that can form a list of beam information fields, and the smaller the bit-width is defined, the larger the value of L, the number of candidates that can direct the beam, and the more freedom there is to form a large list of beam information fields.

Since the generally known maximum number of DCI payload bits is 140 bits excluding CRC, fields should be configured within the limited DCI payload size. The DCI information of the aperiodic beam indication can be determined by considering the DCI payload size by considering two fields, L beam information fields and T (T=L or T=1) time resource information fields mapped to them, even when a dynamic OFF indication is combined.

Considering the limitation of the DCI payload size, the number of beam indices of the access link, N, which is a factor defining the bit width of the beam information field, and N+k, which is a combination of k OFF states for the corresponding beam indices, can be interpreted in the following ways.

Method 1. NCR can be determined by interpreting N+k according to the number configured by gNB.

The N value can affect the DCI payload size. Therefore, it can be more efficient to configure DCI information when the N value is configurable rather than fixed. That is, in the case of a fixed N value, the receiving NCR-MT should always interpret it according to a constant bit-width regardless of the structure of the DCI field, whereas in the case of a configurable N value, there is flexibility to reduce unnecessary bit waste.

Therefore, gNB can set the N value by considering the k value that determines TDD/FDD.

If there is no problem with the limitation of the DCI payload size by considering the k value that determines TDD/FDD, NCR-MT can be applied by interpreting it as the N value, which is the total number of candidate beams. In this case, NCR can determine, interpret, and apply the k value by itself. That is, in the case of NCR operating in TDD, it can interpret/apply k=1, and in the case of NCR operating in FDD, it can interpret/apply k=3 or k=2.

However, if the DCI payload size limit is reached and it is difficult to use the N value as it is, NCR-MT can reset the N value by considering other parameters from the gNB. In this case, N+k can be reset by additionally considering the k value determined by whether the NCR operates in TDD/FDD (i.e., gNB also determines whether TDD/FDD is used).

For example, in the case of an NCR environment operating with TDD, when the payload size limit for the beam information field is 60 bits, if the number of beam indices that the gNB wanted to set was N=15 and the number of beam information fields was also L=15, considering that the OFF state k=1 for TDD NCR, 60 bits can be satisfied by ceil(log₂(N+k)) * L bits. Therefore, NCR-MT can apply the value set to N=15 as is.

As another example, in an NCR environment operating with FDD, if the payload size limit for the beam information field was 60 bits, and the number of beam indexes the gNB wanted to set was N=15 and the number of beam information fields was L=15, then considering the OFF state k=3 for FDD NCR, ceil(log₂(N+k)) * L = 75 bits, which exceeds 60 bits and causes a problem. In this case, gNB can either i) reset L to 4 while leaving N=15 as is, or ii) reset from N=15 to N=13. In the above i), when L is reduced and reset to 4, the payload size limitation is satisfied by ceil(log₂(N+k)) * L = 60 bits. In the above ii), if the NCR-MT interprets N=13, the beam information field can also be at most Lₘₐₓ=13, and ceil(log₂(N+k)) * L = 52 bits, and therefore, the payload size limitation of 60 bits can be satisfied. When the gNB selects an appropriate method among the two reset methods (i) and (ii), the NCR-MT applies the corresponding N value when interpreting the received dynamic OFF indication.

For the sake of clarity on how it works, we did not consider the payload for the T time resource fields mapped to the beam information field, but we can also consider the payload size set to T=L or T=1, and as in the above-described way of working, the gNB can reset the value of N by considering the k value representing the OFF state of the NCR in TDD or FDD operation, and the NCR-MT can interpret that value as N.

Method 2. NCR can be determined by interpreting it as a fixed value or default value for N and k.

If for some reason the DCI information cannot be set through the gNB and should be determined as a mutually agreed value, the number of beam indices N can be defined as a fixed value or a default value. However, the value of N cannot be greater than N_{AC}, which is the number of beams physically supported in the NCR access link.

The value of N (N≤N_{AC}) can be defined as a fixed value so that the beam information field can use a maximum value that does not exceed the payload size limit. In addition, when NCR operates in TDD, there can be one OFF state (k=1) for the beam index, and when NCR operates in FDD, there can be two or three OFF states (k=2 or k=3) for the beam index.

In other words, NCR-MT interprets both the number of beam information fields L and the number of beam indices for them as N, that is, it can calculate and apply the N value that can have the closest maximum value to the limited payload size of ceil(log₂(N+k)) * N bits.

For example, in an NCR environment operating in TDD, when the payload size limit of the beam information field is 25 bits, if NCR-MT is determined as N=7, considering that the OFF state k=1 for TDD NCR, it becomes 21 bits by ceil(log₂(N+k)) * N bits, which satisfies the payload size limit, so it can be determined as N=7.

If NCR-MT has difficulty in determining the N value for some reason, the N value can be determined as a predefined default value to ensure a minimum dynamic OFF indication operation. If NCR-MT cannot interpret the N value according to the FR1 or FR2 band, if default values for N have been defined, NCR-MT can apply those values. Alternatively, if NCR-MT does not receive the value of N from gNB or cannot determine it based on information from gNB, a default value can be applied. Considering that the number of beams may be large in the FR2 band, the number of beams supported by NCR (N=N_{AC}) can be applied as is. Meanwhile, in the FR1 band, the default value of N=1 can be applied considering that the number of beams is relatively small or it may be an omnidirectional signal. Alternatively, the default value of N= 1 can be applied regardless of the frequency band.

Default values can also be applied to the k value that distinguishes the operation of TDD/FDD. When operating as TDD, k=1 can be applied, and when operating as FDD, k=3 or k=2 can be applied. Alternatively, k=1 can be applied as the default value regardless of whether it is TDD/FDD.

For the sake of clarity in the operation mode, the payload for the T time resource fields mapped to the beam information field is not considered, but the payload size determined according to T=L or T=1 can be also considered, and k=1 or k=3 representing the OFF state of the NCR for TDD or FDD operation as in the above operation mode is considered, and a fixed value and/or a default value are defined, and NCR-MT can interpret that value as N.

This method may have the problem of lacking flexibility in that it interprets by maintaining a fixed value or default value, but it has the advantage of no additional signaling in that it is fixed to a promised value without separate configurations.

The methods proposed above can be applied independently, but multiple methods can be applied together depending on the situation. For example, if N or k is interpreted as a fixed value, but if gNB is in a situation where it can set the value of N or k, it can interpret N+k by newly applying it in the same form as Method 1.

Based on the above proposed method, the dynamic OFF operation of NCR can be expected as follows.
1. NCR-MT receives DCI for dynamic OFF indication from gNB and obtains information for performing OFF operation. Based on this, NCR determines time resources to perform OFF operation. Based on this information, NCR-Fwd does not perform forwarding operation in time resources instructed to perform OFF operation. (i.e., dynamic OFF operation)
2. Additionally, for NCRs operating in an FDD environment, DCI for dynamic OFF indication can be received to receive information on 'time resources to perform DL OFF operation', 'time resources to perform UL OFF operation', and/or 'time resources to perform both DL OFF and UL OFF operations'.

Based on this information, NCR-Fwd does not perform the DL forwarding operation in the time resource instructed to perform the DL OFF operation. That is, if NCR-Fwd determines to perform the forwarding operation by receiving beam index information in a specific time resource and is instructed to perform the DL OFF operation, it does not perform the DL forwarding operation but performs the UL forwarding operation.

The UL forwarding operation is not performed in the time resource instructed to perform the UL OFF operation. That is, if the NCR-Fwd determines to perform the forwarding operation by being instructed with beam index information in a specific time resource, but is instructed to perform the UL OFF operation, the UL forwarding operation is not performed and the DL forwarding operation is performed.

The forwarding operations of DL and UL are not performed in a time resource instructed to perform both DL OFF and UL OFF operations. That is, when NCR-Fwd determines to perform a forwarding operation by being instructed with beam index information in a specific time resource, but is instructed to perform both DL OFF and UL OFF operations, the forwarding operations of UL and DL are not performed.

Or, it may receive information on 'time resources to perform DL OFF operation' and/or 'time resources to perform UL OFF operation'. Based on this information, NCR-Fwd does not perform DL forwarding operation in the time resources indicated to perform DL OFF operation. It does not perform UL forwarding operation in the time resources indicated to perform UL OFF operation.

If NCR-Fwd determines to perform a forwarding operation by being instructed with beam index information at a specific time resource, but is instructed to perform a DL OFF operation and not a UL OFF operation, the DL forwarding operation is not performed and the UL forwarding operation is performed.

If NCR-Fwd determines to perform a forwarding operation by being instructed with beam index information at a specific time resource, but is instructed to perform a UL OFF operation and not a DL OFF operation, the UL forwarding operation is not performed and the DL forwarding operation is performed.

When NCR-Fwd is instructed to perform forwarding operation by receiving beam index information at a specific time resource, but is instructed to perform both DL OFF operation and UL OFF operation, it does not perform forwarding operation of UL and DL.

Or, it may receive information of 'time resource to perform OFF operation for both DL and UL'. In this case, NCR-Fwd does not perform forwarding operation for both DL and UL in the time resource indicated to perform OFF operation.

3. For the above operation, the DCI may include L beam information fields. One beam index among N beam indices may be indicated through each beam information field. Or, one OFF operation among k OFF operations may be indicated.

For TDD, NCR determines k as 1. NCR determines that OFF operation is indicated when a specific value in the beam information field is indicated.

For FDD, NCR determines k as 3. NCR determines that DL OFF operation is indicated when a specific value (value 1) is indicated through the beam information field. When another specific value (value 2) is indicated, it determines that UL OFF operation is indicated. When another specific value (value 3) is indicated, it determines that DL and UL OFF operations are indicated.

Or, NCR determines k as 2. NCR determines that DL OFF operation is indicated when a specific value (value 1) is indicated through the beam information field. NCR determines that UL OFF operation is indicated when another specific value (value 2) is indicated.

Alternatively, NCR determines k as 1. NCR determines that OFF operation is indicated for both DL and UL when a specific value in the beam information field is indicated.

Additionally, the bit-width of each beam information field can vary depending on the values of N and k. For example, NCR-MT determines the bit-width of each beam information field as ceil(log₂(N+k)).

4. For the above operation, NCR-MT needs to know the bit width to interpret the beam information field, and for this, it needs to know the N value. For this, NCR-MT determines the N value using at least one of the methods proposed in this disclosure.

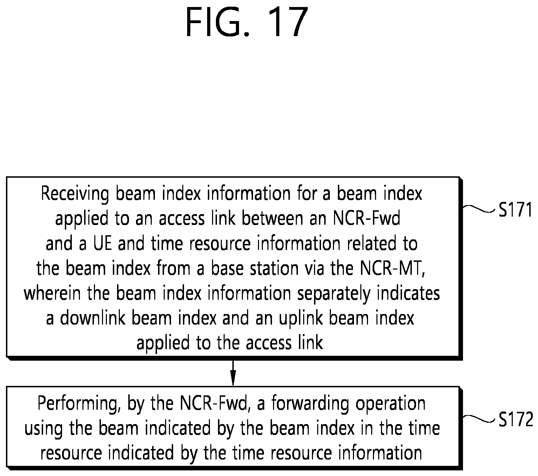

FIG. 17 illustrates an operation method of NCR including NCR-MT and NCR-Fwd in a wireless communication system.

Referring to FIG. 17, beam index information for a beam index applied to an access link between an NCR-Fwd and a UE and time resource information related to the beam index are received from a base station via the NCR-MT (S171). At this time, the beam index information separately indicates a downlink beam index and an uplink beam index applied to the access link.

For example, the beam index information may include both the downlink beam index and the uplink beam index.

In this case, the base station can semi-statically/semi-persistently/dynamically instruct {downlink beam index, uplink beam index, time resource} to the NCR (specifically, NCR-MT) through the beam index information and the time resource information.

In some embodiments, the beam index information may indicate a beam pair index for a beam pair of the downlink beam index and the uplink beam index. The beam pair index is associated with a pair of a specific downlink beam index and a specific uplink beam index.

In this case, the base station can semi-statically/semi-persistently/dynamically instruct {beam pair index, time resource} to NCR (specifically NCR-MT) through the beam index information and the time resource information.

According to an embodiment, the beam index information indicates the downlink beam index or the uplink beam index through a beam index value. Specifically, if the beam index value is a value within a first range (e.g., 0 to N1), it may be interpreted as the downlink beam index, and if the beam index value is a value within a second range (N1+1 to N2), it may be interpreted as the uplink beam index. NCR (specifically NCR-MT) can determine whether it is indicating a downlink or uplink beam by knowing the beam index value.

In this case, the base station can semi-statically/semi-persistently/dynamically instruct {DL/UL beam index, time resource} to NCR (specifically NCR-MT) through the beam index information and the time resource information. The above 'DL/UL beam index' can be interpreted as a DL beam index or a UL beam index depending on the beam index value as described above.

According to an embodiment, the beam index information includes a beam index value and an indicator, and depending on the value of the indicator, the beam index value can be interpreted as the downlink beam index or the uplink beam index.

In this case, the base station can semi-statically/semi-persistently/dynamically indicate {DL/UL indicator, beam index, time resource} to the NCR (specifically, NCR-MT) through the beam index information and the time resource information. If the 'DL/UL indicator' indicates DL, the beam index is interpreted as a downlink beam index, and if the 'DL/UL indicator' indicates UL, the beam index is interpreted as an uplink beam index.

Meanwhile, the time resource information may include a first time resource related to the downlink beam index and a second time resource related to the uplink beam index according to an embodiment.

Additionally, the base station can implicitly/explicitly instruct NCR-MT to differentiate between downlink (DL) ON-OFF and uplink (UL) ON-OFF of NCR-Fwd.

For example, NCR-MT determines/controls that NCR-Fwd operates ON in a time resource indicated by a DL beam index, and determines/controls that NCR-Fwd operates ON in a time resource indicated by a UL beam index.

That is, the NCR-Fwd performs an ON operation in the first time resource associated with the downlink beam index. And/or the NCR-Fwd performs an ON operation in the second time resource associated with the uplink beam index.

In an embodiment, if the beam index value indicated by the beam index information is a specific value, the NCR-Fwd performs an OFF operation in a time resource related to a beam having the beam index value. That is, the NCR-MT determines that the NCR-Fwd is instructed to perform an OFF operation in a time resource related to a beam having the beam index value.

In an embodiment, when the beam index value indicated by the beam index information is a first value, the NCR-Fwd performs a downlink OFF operation in a time resource related to a beam having the first value, when the beam index value is a second value, the NCR-Fwd performs an uplink OFF operation in a time resource related to a beam having the second value, and when the beam index value is a third value, the NCR-Fwd performs a downlink OFF operation and an uplink OFF operation in a time resource related to a beam having the third value.

In case the base station semi-statically/semi-persistently/dynamically indicates {DL/UL indicator, beam index, time resource} to the NCR (specifically, NCR-MT) through the beam index information and the time resource information, the DL/UL indicator may be extended (e.g., by increasing the number of bits) to indicate i) downlink, ii) uplink, iii) downlink OFF operation, iv) uplink OFF operation, or v) downlink OFF operation and uplink OFF operation.

Alternatively, the OFF operation can be indicated via an independent field.

For example, a base station may semi-statically/semi-persistently/dynamically instruct NCR (specifically NCR-MT) to {OFF indication, time resource}.

That is, NCR-MT receives an OFF indicator corresponding to a time resource, and the OFF indicator can indicate a downlink OFF operation or an uplink OFF operation for the time resource.

Alternatively, the OFF indicator may increase the number of bits to indicate i) a downlink OFF operation, ii) an uplink OFF operation, or iii) a downlink OFF operation and an uplink OFF operation for the time resource.

The NCR-Fwd performs a forwarding operation using the beam indicated by the beam index in the time resource indicated by the time resource information (S172).

In FIG. 17, an example is described in which the beam index information separately indicates a downlink beam index and an uplink beam index applied to an access link. The beam index information may also separately indicate a downlink beam index and an uplink beam index applied to a backhaul link between a base station and an NCR-Fwd, depending on the embodiment.

According to the above method, the beam index and ON-OFF operation applied to DL and UL for the access link of NCR-Fwd in an FDD environment can be distinguished and instructed. Therefore, the DL forwarding operation and the UL forwarding operation can be performed independently, thereby increasing transmission efficiency.

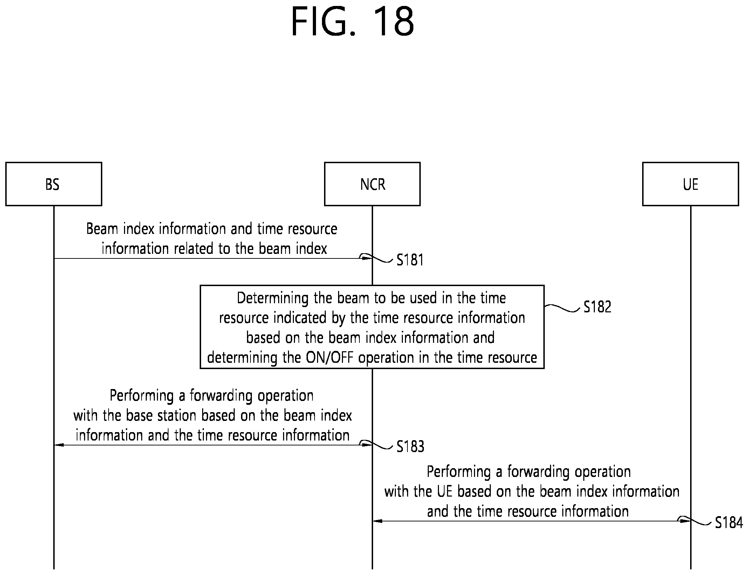

FIG. 18 illustrates signaling and operation between a base station, an NCR, and a UE when applying the method of FIG. 17.

Referring to FIG. 18, the base station transmits beam index information for a beam index and time resource information related to the beam index to the NCR-MT of the NCR including NCR-MT and NCR-Fwd (S181).

As described above, the beam index information separately indicates the downlink beam index and uplink beam index applied to the access link between the NCR-Fwd and the UE. Depending on the embodiment, the beam index information may also separately indicate a downlink beam index and an uplink beam index applied to a backhaul link between a base station and an NCR-Fwd.

NCR (NCR-MT) determines the beam to be used in the time resource indicated by the time resource information based on the beam index information and determines the ON/OFF operation of NCR-Fwd in the time resource (S182). This has been described above with reference to FIG. 17.

NCR performs forwarding operation with the base station based on the beam index information and the time resource information (S183).

NCR performs forwarding operation with the UE based on the beam index information and the time resource information (S184).

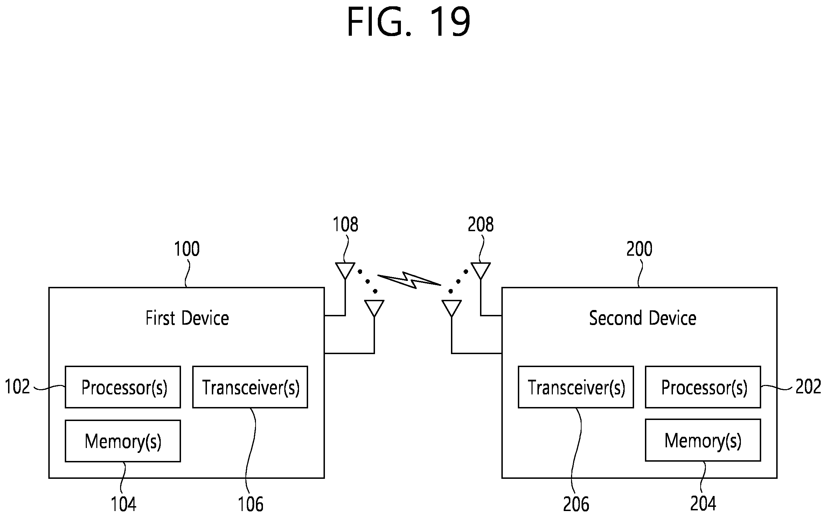

FIG. 19 illustrates a wireless device applicable to this specification.

Referring to FIG. 19, the first wireless device 100 and the second wireless device 200 may transmit/receive wireless signals through various wireless access technologies (e.g., LTE, NR).

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including indications to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In this specification, the wireless device may refer to a communication modem/circuit/chip.

The processor 102 may be included in an NCR including a network-controlled repeater (NCR)-mobile termination (MT) and an NCR-Forwarding (Fwd). The processor 102 receives beam index information for a beam index applied to an access link between the NCR-Fwd and a UE and time resource information related to the beam index from a base station through the NCR-MT, and the NCR-Fwd performs a forwarding operation using a beam indicated by the beam index in a time resource indicated by the time resource information. The beam index information separately indicates a downlink beam index and an uplink beam index applied to the access link.

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including indications to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In this specification, the wireless device may refer to a communication modem/circuit/chip.

Processor 202 may be included in a base station. The processor 202 transmits beam index information for a beam index applied to an access link between the NCR-Fwd and the UE and time resource information related to the beam index to the NCR-MT of the NCR including the NCR-MT and the NCR-Fwd. The beam index information separately indicates a downlink beam index and an uplink beam index applied to the access link.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The one or more processors 102 and 202 may be implemented as at least one computer readable medium (CRM) including indications based on being executed by the at least one processor.

The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

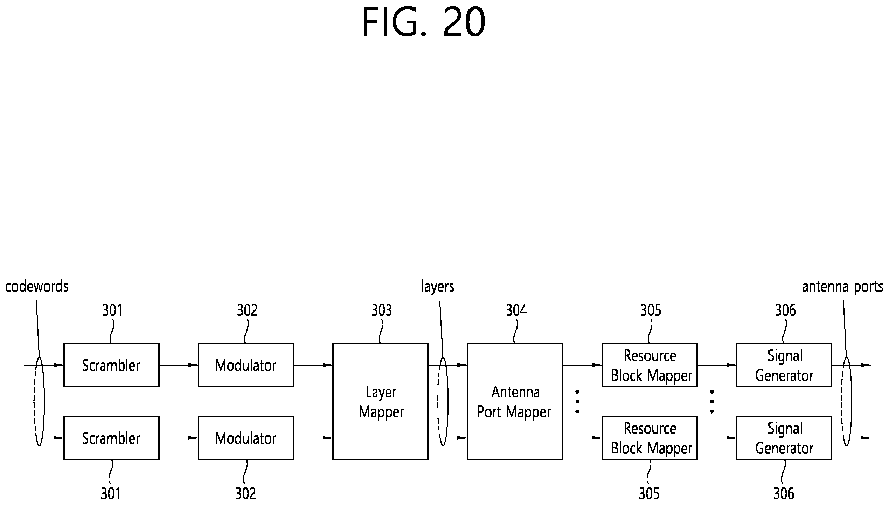

FIG. 20 shows an example of a structure of a signal processing module. Herein, signal processing may be performed in the processors 102 and 202 of FIG. 19.

Referring to FIG. 20, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

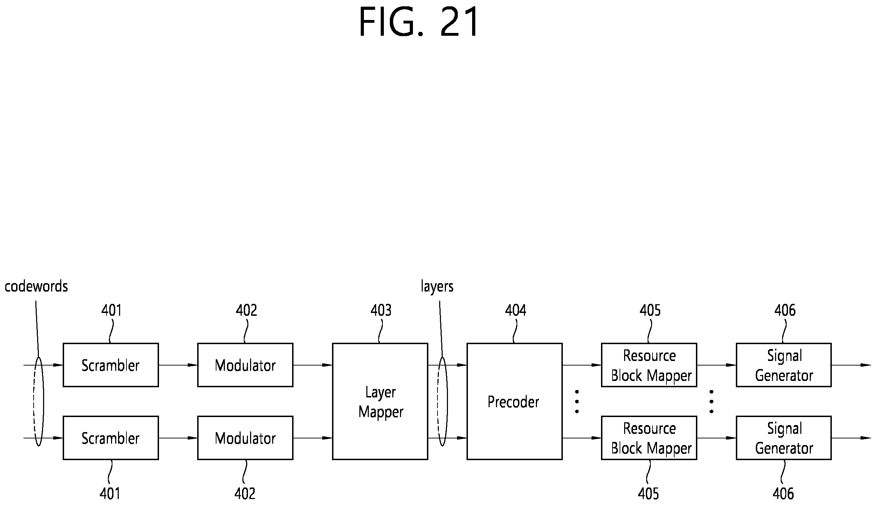

FIG. 21 shows another example of a structure of a signal processing module in a transmitting device. Herein, signal processing may be performed in a processor of a UE/BS, such as the processors 102 and 202 of FIG. 19.

Referring to FIG. 21, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

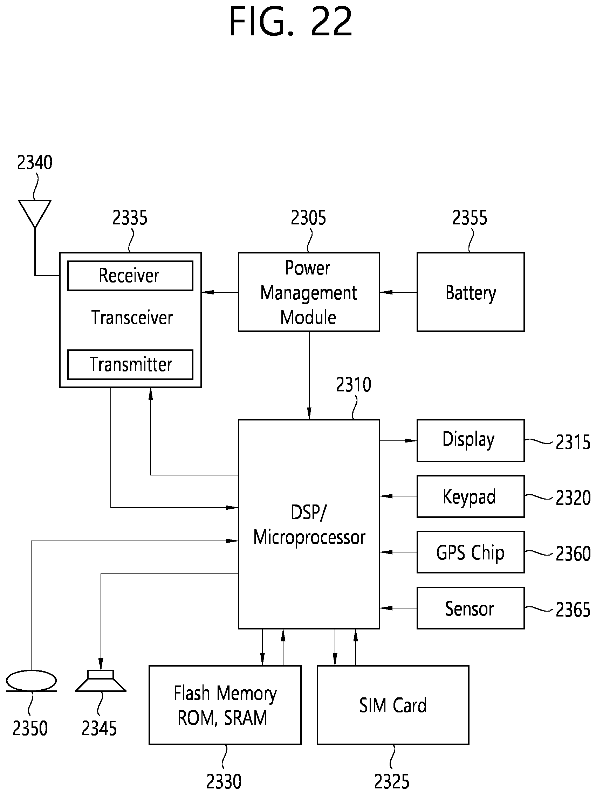

FIG. 22 illustrates an example of a wireless communication device according to an implementation example of the present disclosure.

Referring to FIG. 22, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 22 may be the processors 102 and 202 in FIG. 19.

The memory 2330 is connected to the processor 2310 and stores information related to operations of the processor. The memory may be located inside or outside the processor and connected to the processor through various techniques such as wired connection and wireless connection. The memory 2330 in FIG. 22 may be the memories 104 and 204 in FIG. 19.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 22, various components such as a camera and a universal serial bus (USB) port may be additionally included in the UE. For example, the camera may be connected to the processor 2310.

FIG. 22 is an example of implementation with respect to the UE and implementation examples of the present disclosure are not limited thereto. The UE need not essentially include all the components shown in FIG. 22. That is, some of the components, for example, the keypad 2320, the GPS chip 2360, the sensor 2365 and the SIM card 2325 may not be essential components. In this case, they may not be included in the UE.

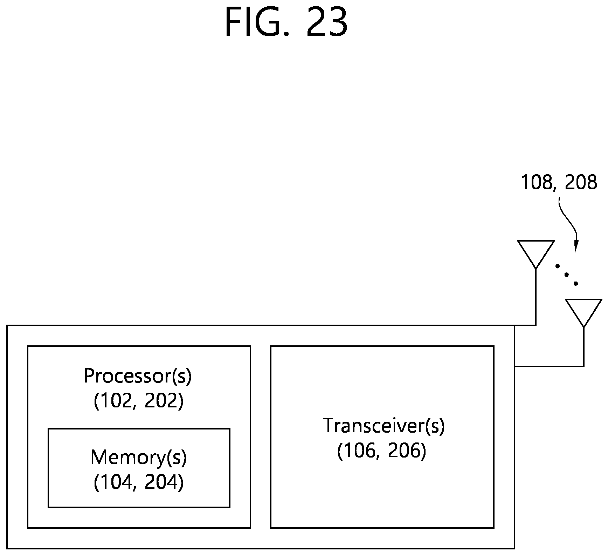

FIG. 23 shows another example of a wireless device.

Referring to FIG. 23, the wireless device may include at least one processor 102, 202, at least one memory 104, 204, at least one transceiver 106, 206, and one or more antennas 108, 208.

The example of the wireless device described in FIG. 19 is different from the example of the wireless described in FIG. 23 in that the processors 102 and 202 and the memories 104 and 204 are separated in FIG. 19 whereas the memories 104 and 204 are included in the processors 102 and 202 in the example of FIG. 23. That is, the processor and the memory may constitute one chipset.

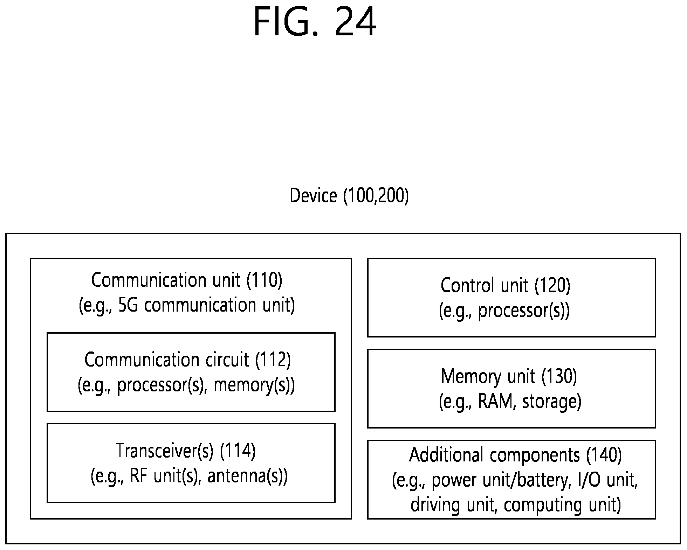

FIG. 24 shows another example of a wireless device applied to the present specification. The wireless device may be implemented in various forms according to a use-case/service.

Referring to FIG. 24, wireless devices 100 and 200 may correspond to the wireless devices of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

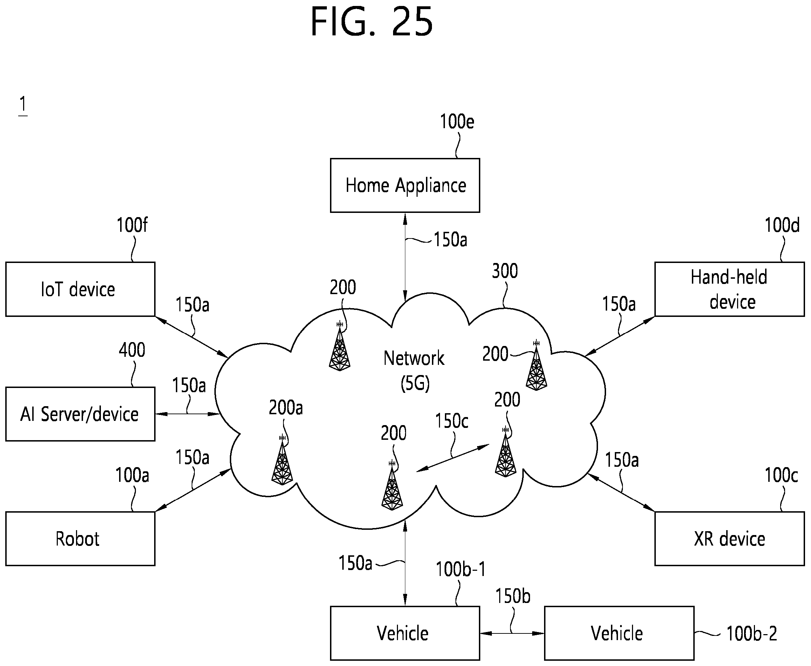

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast UE, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. In addition, each element, component, unit/portion, and/or module within the wireless devices 100 and 200 may further include one or more elements. For example, the control unit 120 may be configured by a set of one or more processors. For example, the control unit 120 may be configured by a set of a communication control processor, an application processor, an Electronic Control Unit (ECU), a graphical processing unit, and a memory control processor. For another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 25 illustrates a communication system 1 applied to the present specification.

Referring to FIG. 25, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 16. For convenience of description, FR1 of the frequency ranges used for an NR system may refer to a "sub 6 GHz range", and FR2 may refer to an "above 6 GHz range" and may be referred to as a millimeter wave (mmW).

**[Table 16]**

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 17. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

**[Table 17]**

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a network-controlled repeater (NCR) including an NCR-mobile termination (MT) and an NCR-forward (Fwd) in a wireless communication system, the method comprising:
receiving, through the NCR-MT, beam index information for a beam index applied to an access link between the NCR-Fwd and a user equipment (UE) and time resource information related with the beam index, from a base station; and
performing, by the NCR-Fwd, a forwarding operation using a beam indicated by the beam index at a time resource indicated by the time resource information,
wherein the beam index information separately indicates a downlink beam index and an uplink beam index applied to the access link.

2. The method of claim 1, wherein the beam index information comprises both the downlink beam index and the uplink beam index.

3. The method of claim 1, wherein the beam index information comprises a beam pair index for a beam pair of the downlink beam index and the uplink beam index.

4. The method of claim 1, wherein the beam index information indicates the downlink beam index or the uplink beam index via a beam index value, and
wherein the beam index value is interpreted as the downlink beam index based on the beam index value being a value within a first range and is interpreted as the uplink beam index based on the beam index value being a value within a second range.

5. The method of claim 1, wherein the beam index information comprises a beam index value and an indicator, and
wherein depending on the value of the indicator, the beam index value is interpreted as either the downlink beam index or the uplink beam index.

6. The method of claim 1, wherein the time resource information comprises a first time resource related with the downlink beam index and a second time resource related with the uplink beam index.

7. The method of claim 1, wherein at a first time resource related with the downlink beam index, the NCR-Fwd performs an ON operation.

8. The method of claim 1, wherein at a second time resource related with the uplink beam index, the NCR-Fwd performs an ON operation.

9. The method of claim 1, wherein based on a beam index value indicated by the beam index information being a specific value, the NCR-Fwd performs an OFF operation in a time resource related to a beam having the beam index value.

10. The method of claim 1, wherein based on a beam index value indicated by the beam index information being a first value, the NCR-Fwd performs a downlink OFF operation in a time resource related to a beam having the first value, based on the beam index value being a second value, the NCR-Fwd performs an uplink OFF operation in a time resource related to a beam having the second value, and based on the beam index value being a third value, the NCR-Fwd performs a downlink OFF operation and an uplink OFF operation in a time resource related to a beam having the third value.

11. The method of claim 1, wherein the beam index information includes a beam index value and an indicator, and
wherein the beam index information indicates i) downlink, ii) uplink, iii) downlink OFF operation, iv) uplink OFF operation, or v) downlink OFF operation and uplink OFF operation depending on a value of the indicator.

12. The method of claim 1, further comprising:
receiving an OFF indicator corresponding to the time resource,
wherein the OFF indicator indicates a downlink OFF operation or an uplink OFF operation for the time resource.

13. The method of claim 1, further comprising:
receiving an OFF indicator corresponding to the time resource,
wherein the OFF indicator indicates i) a downlink OFF operation, ii) an uplink OFF operation, or iii) a downlink OFF operation and an uplink OFF operation for the time resource.

14. A network-controlled repeater (NCR) including an NCR- mobile termination (MT) and an NCR-forward (Fwd), the NCR comprising:
at least one transceiver;
at least one memory; and
at least one processor operably coupled with the at least one memory and the at least one transceiver,
wherein the at least one processor is adapted to:
receive, through the NCR-MT, beam index information for a beam index applied to an access link between the NCR-Fwd and a user equipment (UE) and time resource information related with the beam index, from a base station; and
perform, by the NCR-Fwd, a forwarding operation using a beam indicated by the beam index at a time resource indicated by the time resource information,
wherein the beam index information separately indicates a downlink beam index and an uplink beam index applied to the access link.

15. An apparatus of a network-controlled repeater (NCR) including an NCR-mobile termination (MT) and an NCR-Forwarding (Fwd), the apparatus comprising:
at least one memory; and
at least one processor operably coupled to the at least one memory,
wherein the at least one processor is adapted to:
receive, through the NCR-MT, beam index information for a beam index applied to an access link between the NCR-Fwd and a user equipment (UE) and time resource information related with the beam index, from a base station; and
perform, by the NCR-Fwd, a forwarding operation using a beam indicated by the beam index at a time resource indicated by the time resource information,
wherein the beam index information separately indicates a downlink beam index and an uplink beam index applied to the access link.

16. A method of operating a base station in a wireless communication system, the method comprising:
transmitting, to an network-controlled repeater (NCR)-mobile termination (MT) of a NCR including the NCR- MT and an NCR-Forwarding (Fwd), beam index information for a beam index applied to an access link between the NCR-Fwd and a user equipment (UE) and time resource information related to the beam index,
wherein the beam index information separately indicates a downlink beam index and an uplink beam index applied to the access link.

17. A base station, comprising:
at least one transceiver;
at least one memory; and
at least one processor operably coupled to the at least one transceiver and the at least one memory,
wherein the at least one processor is adapted to:
transmit, to an network-controlled repeater (NCR)-mobile termination (MT) of a NCR including the NCR- MT and an NCR-Forwarding (Fwd), beam index information for a beam index applied to an access link between the NCR-Fwd and a user equipment (UE) and time resource information related to the beam index,
wherein the beam index information separately indicates a downlink beam index and an uplink beam index applied to the access link.
